(19) Europäisches Patentamt / European Patent Office / Office européen des brevets

(11) **EP 3 324 178 B1**

(12) **EUROPEAN PATENT SPECIFICATION**

(45) Date of publication and mention of the grant of the patent:
**05.06.2019 Bulletin 2019/23**

(51) Int Cl.:
***G01N 27/416*** (2006.01)   ***G01N 27/26*** (2006.01)

(21) Application number: **17207651.5**

(22) Date of filing: **01.04.2015**

(54) **NOX CONCENTRATION MEASUREMENT SYSTEM**

MESSSYSTEM DER NOX-KONZENTRATION

SYSTÈME DE MESURE DE LA CONCENTRATION DE NOX

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**

(30) Priority: **22.04.2014 JP 2014088468**
**09.02.2015 JP 2015023370**

(43) Date of publication of application:
**23.05.2018 Bulletin 2018/21**

(62) Document number(s) of the earlier application(s) in accordance with Art. 76 EPC:
**15783318.7 / 3 136 091**

(73) Proprietor: **DENSO CORPORATION**
**Kariya-city**
**Aichi-pref., 448-8661 (JP)**

(72) Inventors:
• **MAEDA, Eriko**
**Kariya-city, Aichi 448-8661 (JP)**
• **MIZUTANI, Keigo**
**Nishio-city, Aichi 445-0012 (JP)**
• **KIMATA, Takehito**
**Kariya-city, Aichi 448-8661 (JP)**
• **TOUDOU, Yuusuke**
**Kariya-city, Aichi 448-8661 (JP)**

(74) Representative: **TBK**
**Bavariaring 4-6**
**80336 München (DE)**

(56) References cited:
**US-A1- 2005 077 177    US-A1- 2011 048 970**
**US-A1- 2011 138 779**

• **S & M 0996 ET AL: "MYU Tokyo Identification of Cross-Sensitivity of Smart NO x Sensors to Ammonia in Urea-Selective Catalyst Reduction Systems via Fast Fourier Transform", Sensors and Materials, 1 January 2014 (2014-01-01), pages 313-318, XP055352582, Retrieved from the Internet: URL:http://myukk.org/sm_pdf/SM0996.pdf**

**Description**

[Technical Field]

The present invention relates to NOx concentration measurement systems capable of measuring a concentration of NOx in exhaust gas which contains NOx and $NH_3$.

[Background art]

Motor vehicles, etc. are generally equipped with a NOx sensor. The NOx sensor measures a concentration of NOx contained in exhaust gas. There is a known NOx sensor having a gas chamber, an oxygen pump cell and a cell sensor. (see the following patent document 1). Exhaust gas is supplied to the gas chamber. The oxygen pump cell adjusts a concentration of oxygen gas contained in the exhaust gas in the gas chamber. The sensor cell measures a concentration of NOx in the exhaust gas in the gas chamber.

The sensor cell is composed of a solid electrolyte body and electrodes made of noble metal. The solid electrolyte body has oxygen ion conductivity. The electrodes are formed on surfaces of the solid electrolyte body. NOx gas is converted to oxygen ions on the surface of the electrode in the NOx sensor. A current of the generated oxygen ions which flow in the solid electrolyte body is detected in order to measure the concentration of NOx.

Recently, there has been developed a method of measuring a concentration of NOx contained in exhaust gas which contains $NH_3$ in addition to NOx. There is a urea SCR system as a background technique of this method. In the urea SCR system, urea water is injected into exhaust gas which contains NOx, in order to generate $NH_3$. A chemical reaction occurs between NOx and $NH_3$ to generate the harmless gas $N_2$ and $H_2O$. Because the exhaust gas processed by the urea SCR system contains non-reacted NOx and $NH_3$, there is a demand to correctly measure a concentration of NOx remained in exhaust gas and to perform a feedback control in order to adjust an injection amount of urea water and engine control.

By the way, there is a problem that it is difficult to correctly measure a concentration of NOx contained in exhaust gas which contains both NOx and $NH_3$. $NH_3$ is oxidized in the NOx sensor to produce NO. For this reason, the NOx sensor detects both NOx contained in the exhaust gas and NO generated by the oxidation of $NH_3$. Accordingly, the NOx sensor cannot measure a concentration of NOx only. In other words, the NOx sensor only measures a sum of the concentration of combustion derived NOx (a concentration of NOx which has originally been contained in the exhaust gas) contained in exhaust gas and a concentration of NO (a concentration of derived NO which has been derived from $NH_3$) generated by the oxidation of $NH_3$.

In order to solve the problem previously described, the following method has been considered. Because it can be estimated that a concentration of derived NO which has been derived from $NH_3$ is approximately equal to a concentration of $NH_3$ contained in outside exhaust gas which is present around the NOx sensor, not inside of the NOx sensor, an additional sensor is required and arranged to measure a concentration of the $NH_3$ contained in the outside exhaust gas. The method further subtracts the concentration of the $NH_3$ contained in the outside exhaust gas measured by the additional sensor from the sum concentration measured by the NOx sensor so as to obtain the concentration of NOx originally contained in the exhaust gas. It has been considered that this method measures a concentration of the combustion derived NOx with high accuracy.

[Citation List]

[Patent Literature]

[Patent document 1] Japanese patent laid open publication No. JP 2011-75546.

[Summary of Invention]

[Technical Problem]

However, the method previously described cannot measure a concentration of combustion derived NOx with high accuracy. That is, heat energy is supplied to $NH_3$ when it is introduced into the gas chamber, and a part of $NH_3$ is chemically changed to $N_2$. The NOx sensor cannot detect derived $N_2$ which has beee derived from a part of the $NH_3$. That is, not all $NH_3$ is chemically converted to NO to be detected by the NOx sensor. For this reason, there are many cases in which a concentration of derived NO which has been derived from $NH_3$ is lower than a concentration of the NH3 in the outside exhaust gas which is present around the NOx sensor, not inside of the NOx sensor.

As previously explained, the NOx sensor measures a sum concentration of a concentration of combustion derived NOx contained in exhaust gas and a concentration of derived NO which has been derived from $NH_3$. The concentration of the derived NO which has been derived from $NH_3$ is different from a concentration of the NH3 contained in the outside exhaust gas. Accordingly, it is impossible to measure a concentration of combustion derived NOx contained in exhaust gas by the subtraction of the concentration of the NH3, which is contained in the outside exhaust gas which is present around the NOx sensor, not inside of the NOx sensor, from the sum concentration measured by the NOx sensor with high accuracy.

Accordingly, it is an object of the present invention to provide a NOx concentration measurement system capable of measuring a concentration of NOx contained in exhaust gas which contains NOx and $NH_3$ with high accuracy.

[Solution to problem]

In accordance with one aspect of the present invention, there is provided a NOx concentration measurement system capable of measuring a concentration of NOx contained in exhaust gas which contains NOx and $NH_3$. The NOx concentration measurement system is equipped with a NOx sensor, a detection section, a $NH_3$ concentration estimation section, and a calculation section.

The NOx sensor is equipped with a gas chamber, a sensor cell and a gas introduction section. Exhaust gas is introduced into the gas chamber. The sensor cell has a solid electrolyte body having oxygen ion conductivity. The sensor cell has a plate shape. Electrodes are formed on the surfaces of the solid electrolyte body. The exhaust gas is introduced into the gas chamber through the gas introduction section. The NOx sensor measures a sum concentration of a concentration of combustion derived NOx, which is contained in the exhaust gas, and a concentration of derived NO which has been derived from $NH_3$ as a concentration of NO generated by oxidization of the $NH_3$. The detection section detects at least one of an air fuel ratio of the exhaust gas, a concentration of $O_2$ contained in the exhaust gas and a concentration of $H_2O$ contained in the exhaust gas. The $NH_3$ concentration estimation section estimates a concentration of $NH_3$ contained in the outside exhaust gas which is present around the NOx sensor, not inside of the NOx sensor before the introduction of the exhaust gas into the gas introduction section of the NOx sensor. The calculation section calculates the concentration of the derived NO which has been derived from $NH_3$ on the basis of the concentration of the NH3 in the outside exhaust gas and at least one of the air fuel ratio, the concentration of $O_2$ and the concentration of $H_2O$. The calculation section calculates the concentration of the combustion derived NOx on the basis of the sum concentration previously described and the concentration of the derived NO which has been derived from $NH_3$.

The inventors according to the present invention have studied the problems previously described, and found that presence of $O_2$ and $H_2O$ contained in exhaust gas affects a chemical reaction of $NH_3$ contained in the exhaust gas to generate $N_2$. That is, heat energy is supplied to exhaust gas in the gas introduction section when the exhaust gas is introduced into the gas chamber of a NOx sensor, and a chemical reaction occurs on the basis of the following equation (1), and further chemical reactions (2) and (3) occur:

$$4NH_3 + 5O_2 \quad 4NO + 6H_2O \text{ ............} \quad (1),$$

$$4NH_3 + 6O_2 \quad 5N_2 + 6H_2O \text{ .............} \quad (2),$$

and

$$4NH_3 + 4NO + O_2 \quad 4N_2 + 6H_2O \text{ .....} \quad (3).$$

As can be understood from the above equation (1), the chemical reaction progresses to the right term in the equation (1) when a concentration of $H_2O$ contained in exhaust gas is low, and $NH_3$ is changed to NO. Further, the chemical reaction progresses to the right term in the equation (2) and the right term in the equation (3) to change NO to $N_2$. That is, when a concentration of $H_2O$ contained in exhaust gas is low, a chemical reaction of $NH_3$ to $N_2$ progresses, and the NOx sensor detects a low amount of NO. Therefor a concentration of derived NO which has been derived from $NH_3$ becomes lower than a concentration of the NH3 in the outside exhaust gas which is present around the NOx sensor, not inside of the NOx sensor.

As previously explained, there is a constant relationship in concentration between the $NH_3$ in the outside exhaust gas, $H_2O$ and derived NO which has been derived from $NH_3$. Accordingly, it is possible to calculate a concentration of the derived NO which has been derived from $NH_3$ by measuring a concentration of $NH_3$ which present outside of the NOx sensor, and a concentration of $H_2O$.

In addition, as can be understood from the chemical equation (1), the chemical reaction progresses to the right term of the equation (1) when a concentration of $O_2$ contained in exhaust gas is high. Further, the chemical reaction progresses to the right term of the equation (3) to change NO to $N_2$. That is, when a concentration of $H_2O$ contained in exhaust gas is high, a chemical reaction of $NH_3$ to $N_2$ progresses, and the NOx sensor detects a low amount of NO.

Therefore a concentration of the derived NO which has been derived from $NH_3$ becomes lower than a concentration of the NH3 in the outside exhaust gas which is present around the NOx sensor, not inside of the NOx sensor.

As previously described, there is a constant relationship in concentration between the NH3, contained in the outside exhaust gas, $O_2$ and the derived NO which has been derived from $NH_3$. Accordingly, it is possible to calculate a concentration of the derived NO which has been derived from $NH_3$ on the basis of the constant relationship which has been obtained by measuring a concentration of the $NH_3$ contained in the outside exhaust gas and a concentration of $O_2$.

In addition, there is a constant relationship between an air fuel ratio and a concentration of $O_2$, and a constant relationship between the air fuel ratio and a concentration of $H_2O$. Accordingly, it is possible to calculate a concentration of the derived NO which has been derived from $NH_3$ by measuring a concentration of the $NH_3$ contained in the outside exhaust gas which is outside of the NOx sensor and the air fuel ratio.

As previously described, it is possible to calculate a correct concentration of the combustion derived NOx with high accuracy on the basis of a concentration of the derived NO which has been derived from $NH_3$ and a sum concentration (which is a sum concentration of a concentration of combustion derived NOx and a concentration of the derived NO which has been derived from $NH_3$) measured by the NOx sensor. For example, it is possible to calculate the concentration of the combustion derived NOx with high accuracy by subtracting the concentration of the derived NO which has been derived from $NH_3$ from the sum concentration. Further, it is possible to calculate the concentration of combustion derived NOx with high accuracy on the basis of using data in a database, the sum concentration and the concentration of the derived NO which has been derived from $NH_3$, where the database has stored the relationship between the sum concentration and the concentration of the derived NO which has been derived from $NH_3$.

As previously described, the present invention can provide the NOx concentration measurement system capable of measuring a concentration of NOx with high accuracy in exhaust gas which contains NOx and $NH_3$.

[Brief Description of Drawings]

[FIG. 1] is a view showing an overall structure of a NOx concentration measurement system according to a first exemplary embodiment of the present invention.

[FIG. 2] is a view showing a cross section of a NOx sensor along the line II-II shown in FIG. 1.

[FIG. 3] is a view showing a cross section of the NOx sensor along the line III-III shown in FIG. 1, along with a schematic of electrical connections thereto.

[FIG. 4] is an exploded perspective view of the NOx sensor used in the NOx concentration measurement system according to the first exemplary embodiment shown in FIG. 1.

[FIG. 5] is a view showing a partially enlarged cross section of the NOx sensor shown in FIG. 1.

[FIG. 6] is a conceptual view of the NOx concentration measurement system according to the first exemplary embodiment shown in FIG. 1.

[FIG. 7] is a conceptual view showing a relationship between a concentration of combustion derived NOx contained in exhaust gas, a concentration of $NH_3$ contained in outside exhaust gas which is present around the NOx sensor, not inside of the NOx sensor, a concentration of the combustion derived NOx measured by the NOx sensor, a concentration of derived NO which has been derived from $NH_3$ measured by the NOx sensor, and a concentration of the combustion derived NOx calculated by the NOx concentration measurement system according to the first exemplary embodiment shown in FIG. 1.

[FIG. 8] is a graph showing a relationship between a concentration of $H_2O$ and a $NH_3$ detection sensitivity in the NOx concentration measurement system according to the first exemplary embodiment.

[FIG. 9] is a graph showing a relationship between a concentration of $O_2$ and the $NH_3$ detection sensitivity in the NOx concentration measurement system according to the first exemplary embodiment.

[FIG. 10] is a graph showing a relationship between A/F and Ip measured by the NOx concentration measurement system according to the first exemplary embodiment.

[FIG. 11] is a graph showing a relationship between A/F and a concentration of $O_2$ measured by the NOx concentration measurement system according to the first exemplary embodiment.

[FIG. 12] is a graph showing a relationship between A/F and a concentration of $H_2O$ measured by the NOx concentration measurement system according to the first exemplary embodiment.

[FIG. 13] is a graph showing a relationship between a thickness of a trap layer and the $NH_3$ detection sensitivity in the NOx concentration measurement system according to the first exemplary embodiment.

[FIG. 14] is a graph showing a relationship between a thickness of a gas introduction section and the $NH_3$ detection sensitivity in the NOx concentration measurement system according to the first exemplary embodiment.

[FIG. 15] is a view showing a cross section of the NOx sensor having an aperture section as the gas introduction section in the NOx concentration measurement system according to the first exemplary embodiment.

[FIG. 16] is a graph showing a relationship between a concentration of $NH_3$ in the exhaust gas and an output of the NOx sensor which has not been compensated by using A/F in the NOx concentration measurement system according to the first exemplary embodiment.

[FIG. 17] is a graph showing a relationship between a concentration of $NH_3$ in test gas and an output of the NOx sensor which have been compensated by using the A/F in the NOx concentration measurement system according to the first exemplary embodiment.

[FIG. 18] is a view showing a conceptual view of an experimental device for the NOx concentration measurement system according to a second exemplary embodiment of the present invention.

[FIG. 19] is a graph showing a relationship at given gas flow rates between a temperature at a gas inlet and a strength of a detection signal of a sensor cell in the NOx concentration measurement system according to the second exemplary embodiment of the present invention.

[FIG. 20] is a graph showing a relationship between a concentration of $H_2O$ and a $NH_3$ detection sensitivity, in which a lateral axis of the graph is divided to a region of not less than 40 of A/F and a region of not more than 40 of the A/F, in the NOx concentration measurement system according to the second exemplary embodiment of the present invention.

[FIG. 21] is a graph showing a relationship between a concentration of $O_2$ and a $NH_3$ detection sensitivity, in which the lateral axis of the graph is divided to a region of not less than 20 of A/F and a region of not more than 20 of the A/F, in the NOx concentration measurement system according to the second exemplary embodiment of the present invention.

[FIG. 22] is a flow chart showing the operation of a calculation section 7 in the in the NOx concentration measurement system according to the second exemplary embodiment of the present invention.

[FIG. 23] is a conceptual view of a relationship between a concentration of combustion derived NOx contained in exhaust gas, a concentration of $NH_3$ contained in outside exhaust gas which is present outside of a NOx sensor, a concentration of the combustion derived NOx measured by the NOx sensor, a concentration of derived NO which has been derived from $NH_3$ measured by the NOx sensor, and a concentration of the combustion derived NOx calculated by the NOx concentration measurement system according to a first comparative example.

[Description of Embodiments]

The NOx concentration measurement system according to the present invention is capable of measuring a concentration of NOx contained in exhaust gas output from an internal combustion engine with high accuracy and high efficiency. It is possible to apply the NOx concentration measurement system according to the present invention to various types of internal combustion engines. For example, it is possible to apply the NOx concentration measurement system according to the present invention to motor vehicles equipped with a urea SCR system.

[Embodiments]

(First exemplary embodiment)

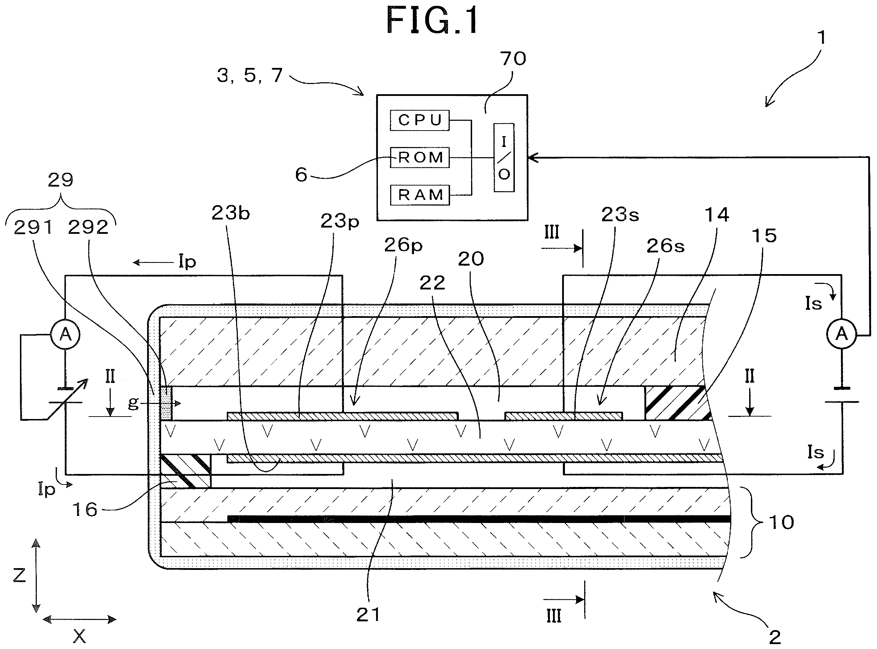

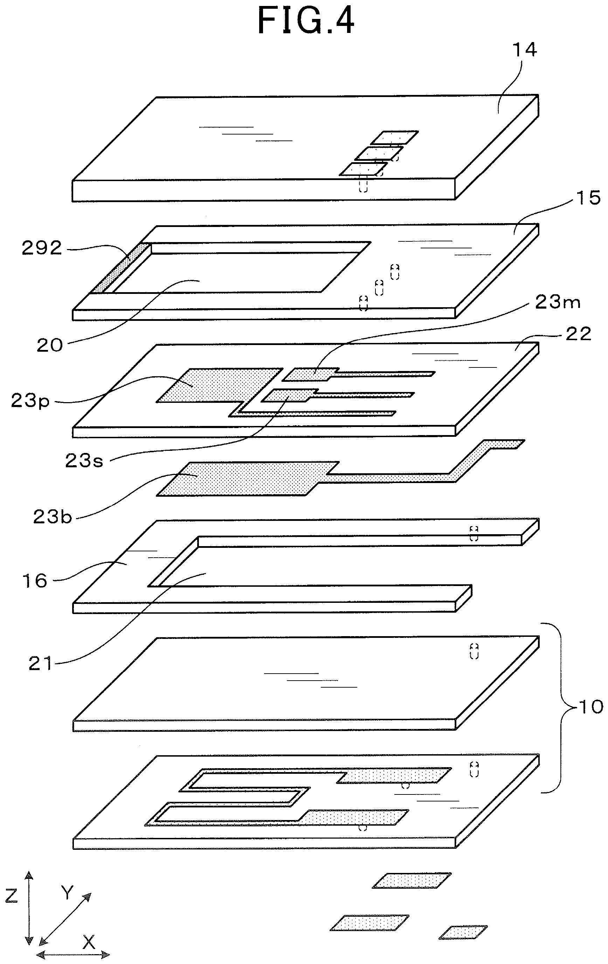

A description will be given of the NOx concentration measurement system according to the first exemplary embodiment with reference to FIG. 1 to FIG. 15. As shown in FIG. 1, the NOx concentration measurement system according to the first exemplary embodiment is equipped with a NOx sensor 2, a detection section 3, a $NH_3$ concentration estimation section 5 and a calculation section 5.

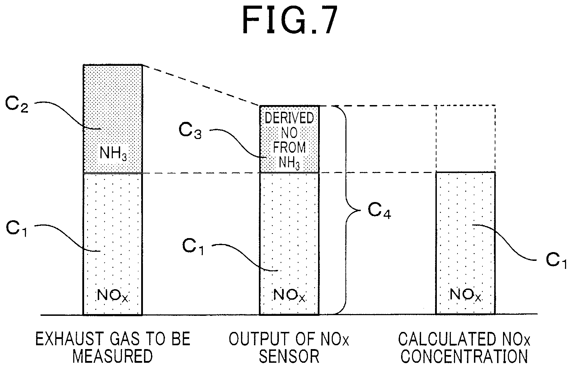

The NOx sensor 2 has a gas chamber 20, a sensor cell 26s and a gas introduction section 29. The sensor cell 26s is composed of an electrode 23 (23s, 23b) formed on a surface of the solid electrolyte body 22 of oxygen ion conductivity having a plate shape. The gas introduction section 29 is a gas passage through which exhaust gas g is introduced into the gas chamber 20 from outside of the NOx concentration measurement system 1. The NOx concentration measurement system 1 has a structure in which the sensor cell 26s measures a sum concentration $c_4$ of a concentration of NOx (as a concentration $c_1$ of combustion derived NOx, see FIG. 7) contained in the exhaust gas g and a concentration of NO (as a concentration $c_3$ of derived NO which has been derived from $NH_3$) which has been generated by oxidation of $NH_3$.

The detection section 3 detects at least one of an air fuel ratio A/F of the exhaust gas g and a concentration of $H_2O$ contained in the exhaust gas g. The $NH_3$ concentration estimation section 5 estimates a concentration $c_2$ (see FIG. 7) of $NH_3$ contained in the outside exhaust gas which is present around the NOx sensor, not inside of the NOx sensor as a concentration of $NH_3$ in the exhaust gas g before the supply to the gas introduction section 29.

The calculation section 5 calculates a concentration $c_3$ of the derived NO which has been derived from $NH_3$ on the basis of the concentration $c_2$ of the $NH_3$ contained in the outside exhaust gas and at least one of the air fuel ratio A/F, the concentration of $O_2$ and the concentration of $H_2O$. The calculation section 5 calculates a concentration $c_1$ of

the combustion derived NOx on the basis of the sum concentration $c_4$ and the concentration $c_3$ of the derived NO.

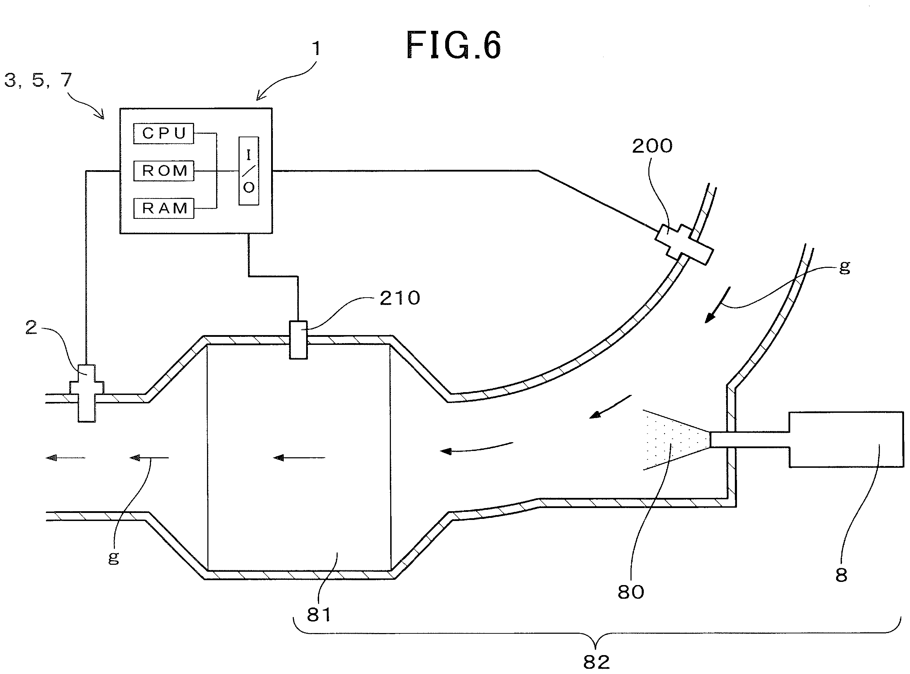

[0027] As shown in FIG. 6, the NOx concentration measurement system 1 according to the first exemplary embodiment is arranged to calculate the concentration of NOx (the concentration $c_1$ of combustion derived NOx) contained in exhaust gas which has been processed by a urea SCR system 82. The urea SCR system 82 is arranged to convert NOx contained in exhaust gas emitted from an internal combustion engine to $N_2$, $H_2O$, etc. In the urea SCR system 82, urea water 80 is injected through a urea water injection valve 8 into exhaust gas g, and a SCR catalyst 81 performs a chemical reaction of $NH_3$ and NOx generated by using the urea water 80 in order to convert NOx to $N_2$, $H_2O$, etc.

The exhaust gas g, after has passed through the SCR catalyst 81, contains non reacted NOx and $NH_3$. The NOx concentration measurement system 1 calculates a NOx concentration (as the concentration $c_1$ of the combustion derived NOx) contained in this exhaust gas g. An injection amount of the urea water 80 is adjusted on the basis of the calculated NOx concentration.

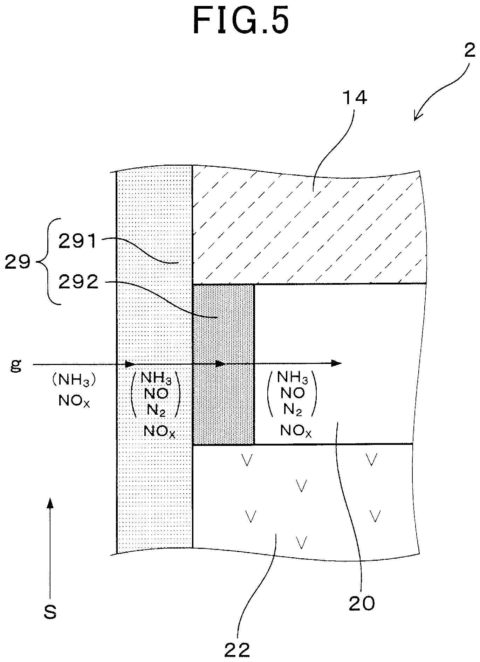

As shown in FIG. 5, the exhaust gas g is introduced into the gas chamber 20 through the gas introduction section 29. The gas introduction section 29 is composed of a trap layer 291 and a diffusion layer 292. The trap layer 291 traps poison material contained in the exhaust gas g. The diffusion layer 292 limits a flow speed of the exhaust gas g. For example, the trap layer 291 and the diffusion layer 292 are made of alumina.

There is a possible case in which a part of $NH_3$ in the exhaust gas g is converted to NO in a chamber S arranged before the gas introduction section 29. Further, thermal energy is supplied to the exhaust gas g when flowing in the gas introduction section 29, and a part of $NH_3$ contained in the exhaust gas g is converted to NO and $N_2$. Accordingly, the exhaust gas g is introduced into the gas chamber 20, which contains combustion derived NOx and $NH_3$ which have been present in the exhaust gas g, and NO and $N_2$ derived from $NH_3$. A pump electrode 23p oxidizes this $NH_3$ to generate NO. The pump electrode 23p will be explained below in detail. The sensor cell 28 measures the sum concentration $c_4$ of the concentration of NO (as the concentration $c_3$ of the derived NO which has been derived from $NH_3$) and the concentration of NOx (as the concentration $c_1$ of the combustion derived NOx) contained in the exhaust gas. It is difficult for the sensor cell 26s to detect concentration $c_3$ of the derived NO which has been derived from $NH_3$ and the concentration $c_1$ of the combustion derived NOx, independently.

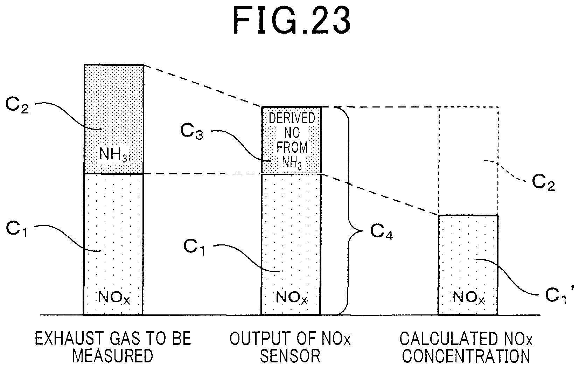

As shown in FIG. 7, a concentration of NO generated by the oxidation of $NH_3$ is lower than the concentration $c_2$ of the $NH_3$ contained in the outside exhaust gas which is present around the NOx sensor, not inside of the NOx sensor. As previously described, a part of $NH_3$ in the exhaust gas g is converted to $N_2$ in the gas introduction section 29. As shown in FIG. 23, when the concentration $c_2$ of the $NH_3$ contained in the outside exhaust gas is subtracted from the sum concentration $c_4$ measured by the NOx sensor 2, a concentration $c_1$, of the combustion derived NOx as the subtraction result becomes lower than an actual concentration $c_1$ of the combustion derived NOx. In the first exemplary embodiment previously described, the calculation section 7 calculates the concentration $c_3$ of the derived NO which has been derived from $NH_3$, and subtracts the concentration $c_3$ of the derived NO from the sum concentration $c_4$. This calculates a correct concentration $c_1$ of the combustion derived NOx with high accuracy.

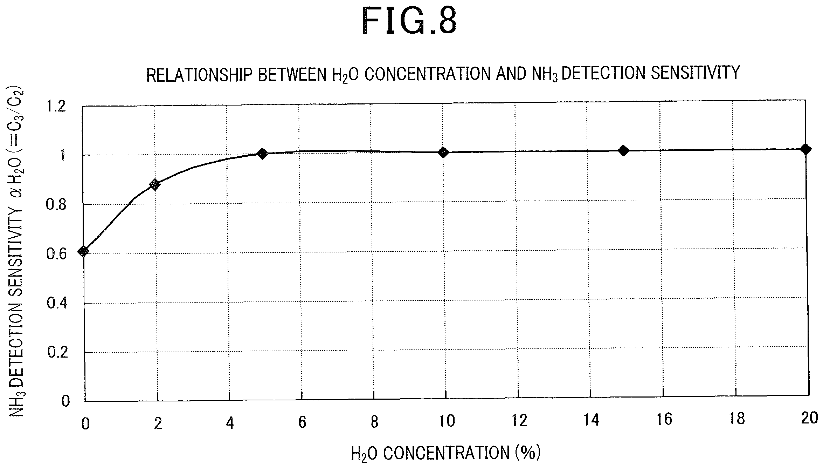

A description will be given of a method of calculating the concentration $c_3$ of the derived NO in detail. As shown in FIG. 8, there is a constant relationship between a concentration of $H_2O$ contained in exhaust gas g and a $NH_3$ detection sensitivity of the NOx sensor. The $NH_3$ detection sensitivity of the NOx sensor 2 can be expressed by the following equation:

$$NH_3 \text{ detection sensitivity} = \text{Concentration } c_3 \text{ of derived NO which has been derived from } NH_3 \, / \, \text{Concentration } c_2 \text{ of } NH_3 \text{ contained in outside exhaust gas which is present outside of NOx sensor.}$$

As can be understood from the graph shown in FIG. 8, when the concentration of $H_2O$ in the exhaust gas g is low, the concentration $c_3$ of the derived NO which has been derived from $NH_3$ is reduced, and the $NH_3$ detection sensitivity becomes reduced. This means that a conversion ratio of $NH_3$ to $N_2$ increases when the concentration of $H_2O$ in the exhaust gas g is low.

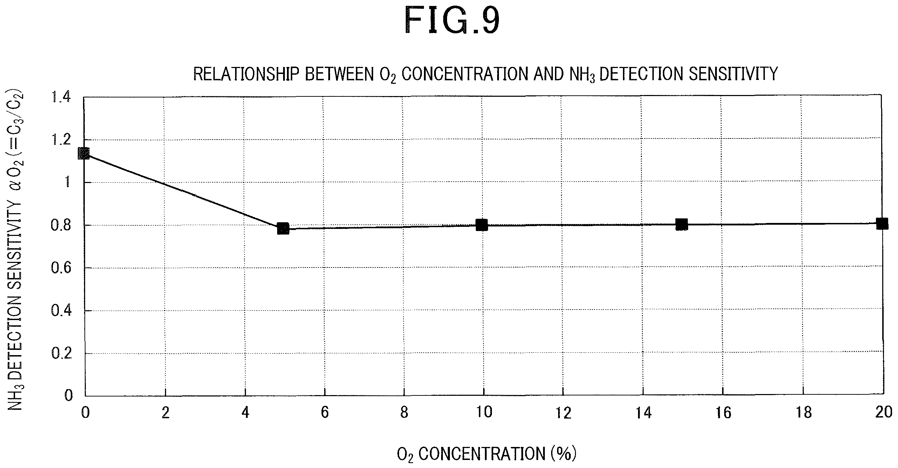

As shown in FIG. 9, there is also a constant relationship between the concentration of $O_2$ in the exhaust gas g and the $NH_3$ detection sensitivity of the NOx sensor. When the concentration of $O_2$ in the exhaust gas g increases, the concentration $c_3$ of the derived NO which has been derived from $NH_3$ is reduced, and the $NH_3$ detection sensitivity becomes reduced. This means that a ratio of converting $NH_3$ to $N_2$ increases when the concentration of $O_2$ in the exhaust gas g is high.

For example, it is possible for the following method to calculate the concentration $c_3$ of the derived NO which has been derived from $NH_3$. That is, a function of the relationship shown in FIG. 8 is stored in advance in the memory section 6 of the calculation section 7 (see FIG. 1). The $NH_3$ detection sensitivity $\alpha_{H2O}$ is calculated on the basis of the

detected concentration of $H_2O$ by using this function. The $NH_3$ detection sensitivity $\alpha_{H2O}$ and the concentration $c_2$ of the $NH_3$ are inserted into the following equation (4) in order to obtain the concentration $c_3$ of the derived NO.

$$c_3 = \alpha_{H2O} \times c_2 \ \ldots\ldots\ldots\ldots(4).$$

Further, it is possible to calculate the concentration $c_3$ of the derived NO by the following method. That is, a function of the relationship shown in FIG. 9 is stored in advance in the memory section 6. The $NH_3$ detection sensitivity $\alpha_{HO2}$ is calculated on the basis of the detected concentration of $O_2$ by using this function. The $NH_3$ detection sensitivity $\alpha_{O2}$ and the concentration $c_2$ of the $NH_3$ contained in the outside exhaust gas are inserted into the following equation (5) in order to obtain the concentration $c_3$ of the derived NO.

$$c_3 = \alpha_{O2} \times c_2 \ \ldots\ldots\ldots\ldots(5).$$

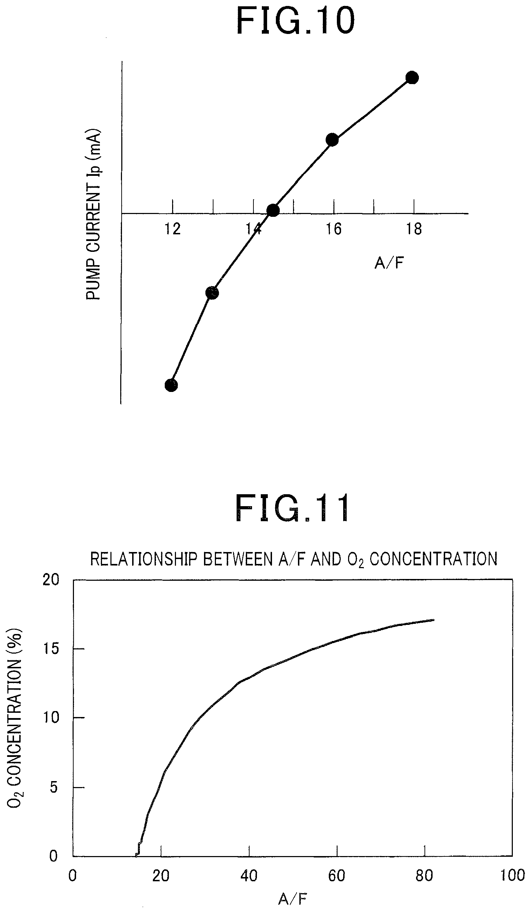

It is also possible to use the following method. That is, there is a relationship shown in FIG. 10 between a pump cell current Ip and the air fuel ratio A/F of the exhaust gas g. The pump cell current Ip flows in the pump cell 26p (see FIG. 1). This relationship will be explained below. Accordingly, it is possible to calculate the air fuel ratio A/F by using a detected value of the pump cell current Ip and the graph shown in FIG. 10. Still further, there is a relationship between the air fuel ratio A/F and the concentration of $O_2$ shown in FIG. 11. Accordingly, it is possible to calculate the concentration of $O_2$ contained in the exhaust gas g by using the detected air fuel ratio A/F and the graph shown in FIG. 11. Still further, it is possible to calculate the $NH_3$ detection sensitivity $\alpha_{O2}$ by using the obtained concentration of $O_2$ and the graph shown in FIG. 9. Accordingly, it is possible to calculate the concentration $c_3$ of the derived NO by using the equation (5).

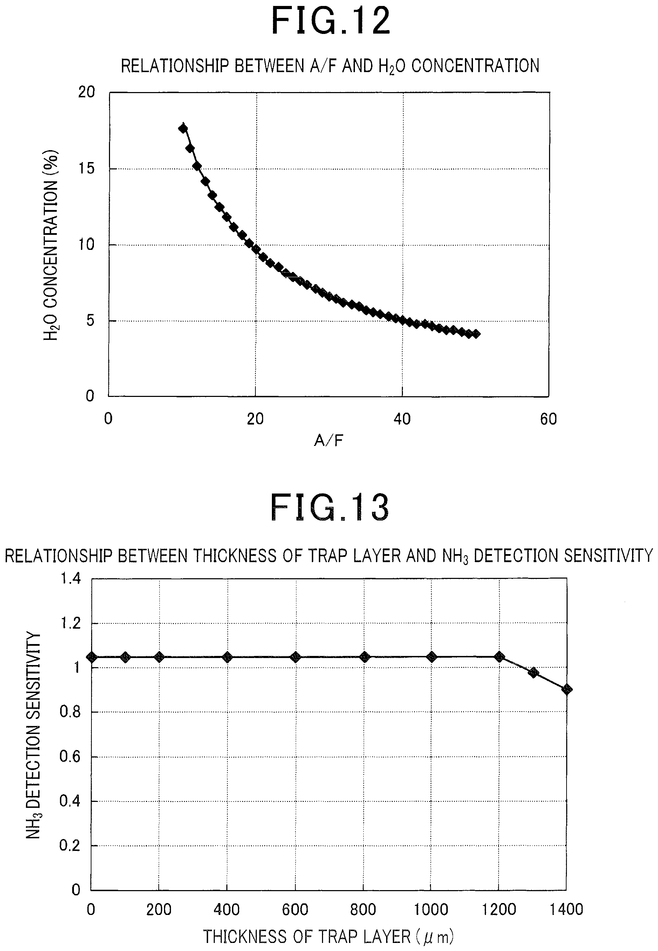

Similarly, it is also possible to use the following method. As previously described, the air fuel ratio A/F of the exhaust gas g is calculated by using the measured value of the pump cell current Ip and the graph shown in FIG. 10. Because there is the relationship shown in FIG. 12 between the air fuel ratio A/F of the exhaust gas g and the concentration of $H_2O$, it is possible to calculate the concentration of $H_2O$ contained in the exhaust gas g by using the obtained air fuel ratio A/F and the graph shown in FIG. 12. Still further, it is possible to calculate the $NH_3$ detection sensitivity $\alpha_{HO2}$ by using the obtained concentration of $H_2O$ and the graph shown in FIG. 8. Accordingly, it is possible to calculate the concentration $c_3$ of the derived NO by using the equation (4). There is the relationship shown in FIG. 12 between the concentration of $H_2O$ and the air fuel ratio A/F. the exhaust gas g contains water vapor in the urea water 80 (see FIG. 6). Accordingly, it is preferable to compensate the concentration of $H_2O$ on the basis of an injection amount of the urea water 80.

It is not necessary to calculate the concentration of $O_2$ and the concentration of $H_2O$ on the basis of the air fuel ratio A/F when the air fuel ratio A/F is used. That is, it is also possible to use a program performing the function of the calculation section 7 (see FIG. 1) to directly calculate the concentration $c_3$ of the derived NO which has been derived from $NH_3$ by using the air fuel ratio A/F and the concentration $c_2$ of the $NH_3$ contained in the outside exhaust gas.

When the concentration $c_3$ of the derived NO is calculated with high accuracy by using the methods previously described, it is possible to calculate the concentration $c_1$ of the combustion derived NOx with high accuracy by subtracting the concentration $c_3$ of the derived NO from the sum concentration $c_4$ (see FIG. 7).

A description will now be given of a detailed structure of the NOx sensor 2. As shown in FIG. 1 to FIG. 4, the NOx sensor 2 has an insulation plate 14, a first spacer 15, the solid electrolyte body 22, a second spacer 16 and a heater section 10. The gas chamber 20 is formed between the solid electrolyte body 22 and the insulation plate 14. A reference gas chamber 21 is formed between the solid electrolyte body 22 and the heater section 10. Atmospheric air as a reference gas is introduced into the reference gas chamber 21.

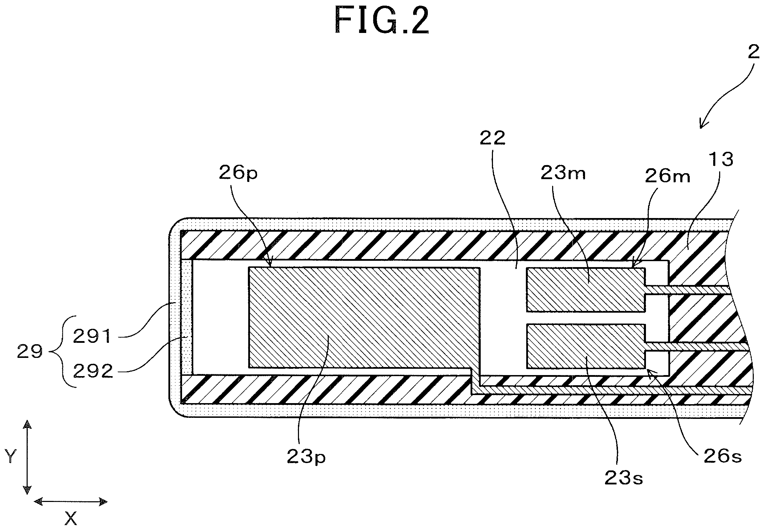

As shown in FIG. 1 and FIG. 2, the pump electrode 23p, a sensor electrode 23s and a monitor electrode 23m are formed on a surface of the solid electrolyte body 22 at the gas chamber 20 side. A reference electrode 23b is formed on a surface of the solid electrolyte body 22 at the reference gas chamber 21 side. The pump electrode 23p and the monitor electrode 23m are made of Pt-Au alloy metal which is inactive material to decompose NOx. In addition, the sensor electrode 23s is made of Pt-Rh alloy metal which is active material to decompose NOx.

The pump electrode 23p, the solid electrolyte body 22 and the reference electrode 23b form the pump cell 26p. The sensor electrode 23s, the solid electrolyte body 22 and the reference electrode 23b form the sensor cell 26s. Further, the monitor electrode 23m, the solid electrolyte body 22 and the reference electrode 23b form a monitor cell 26m.

The pump cell 26p is used to adjust a concentration of $O_2$ in the exhaust gas g. The pump electrode 23p in the pump cell 26p decomposes $O_2$ to generate oxygen ions. The generated oxygen ions are discharged to the reference gas chamber 21 through the solid electrolyte body 22. The pump electrode 23p oxidizes $NH_3$ to generate NO.

[0045] As shown in FIG. 1, the exhaust gas g is introduced into the gas chamber 20 through the gas introduction section 29, and passes through the pump electrode 23p and reaches sensor electrode 23s and the monitor electrode 23m. The closer the exhaust gas g moves to the sensor electrode 23s through the introduction section 29, the more the concentration of $O_2$ in the exhaust gas g reduces. The closer the exhaust gas g moves to the sensor electrode 23s through the introduction section 29, the more the concentration of $NH_3$ in the exhaust gas g reduces, and the concentration $c_3$ of the derived NO increases.

The sensor electrode 23s decomposes NOx to generate oxygen ions, and decomposes NO, which has been generated by oxidization of $NH_3$. A sensor current Is is generated when the generated oxygen ions flow in the solid electrolyte body 22. This sensor current Is is measured, and the concentration $c_1$ of the combustion derived NOx and the concentration $c_3$ of the derived NO are also measured on the basis of the measured sensor current Is.

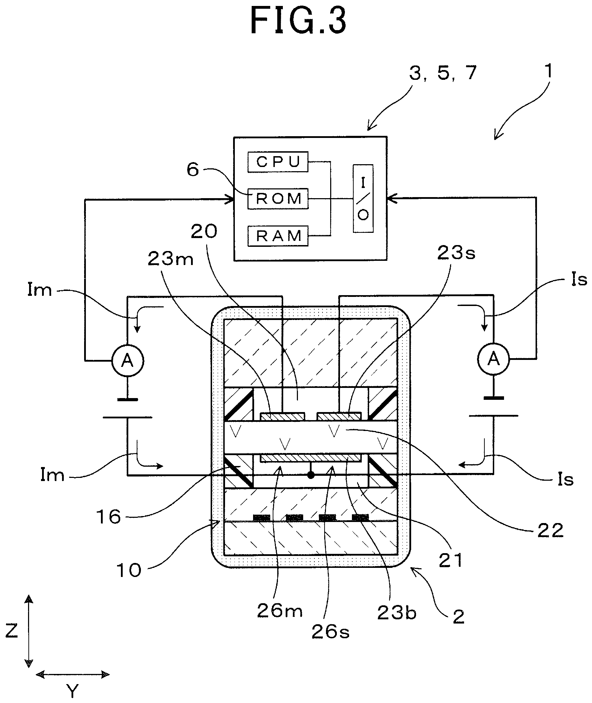

A small amount of $O_2$, which has not eliminated by the pump cell 26p, is remained in the exhaust gas g on the surface of the sensor electrode 23s. For this reason, it is necessary for the monitor cell 26m to measure and compensate the concentration of the remaining $O_2$. That is, the monitor current Im is detected, which is generated when the remaining $O_2$ is decomposed by the monitor electrode 23m (see FIG. 3) and flows in the solid electrolyte body 22. The monitor current I, is subtracted from the sensor current Is. This makes it possible to measure the sum concentration $c_4$ with high accuracy without receiving the influence of the remaining $O_2$.

Next, a description will now be given of the $NH_3$ concentration estimation section 5. For example, as shown in FIG. 6, an upstream side NOx sensor 200 is arranged at the upstream side of the urea water injection valve 8. The upstream side NOx sensor 200 measures the concentration of NOx (the upstream side NOx concentration) in the exhaust gas g. Further, a temperature sensor 210 is arranged to detect a temperature T of the SCR catalyst 81. There is a constant relationship between the upstream side NOx concentration, the temperature T of the SCR catalyst 81, an injection amount of the urea water 80 which has been injected, and the concentration of $NH_3$ contained in the exhaust gas g at the downstream side of the SCR catalyst 81. That is, the higher the temperature T of the SCR catalyst 81, the faster the chemical reaction between $NH_3$ and NOx proceeds. When the temperature T of the SCR catalyst 81 is high, a less amount of $NH_3$ is remained in the exhaust gas at the downstream side.

In addition, when a large amount of the urea water 80 is injected into the exhaust gas g, $NH_3$ is usually remained in the exhaust gas g at the downstream side. Further, when the upstream side NOx concentration is high, the concentration of $NH_3$, which is remained in the exhaust gas at the downstream side, is easily reduced. It is accordingly possible to estimate the concentration of $NH_3$ contained in the exhaust gas g at the downstream side on the basis of these relationships previously described. It is acceptable to use other various methods of estimating the concentration of $NH_3$. As omitted from the drawings, it is also acceptable to detect the concentration of $NH_3$ contained in the exhaust gas g by using an additional $NH_3$ sensor which is arranged at the downstream side of the SCR catalyst 81.

In the NOx sensor used by the first exemplary embodiment, the trap layer 291 has a thickness of not more than 1,200 $\mu$m. Each of the trap layer 291 and the diffusion layer 291 has a porosity within a range of 10 to 90 %. The gas introduction section 29 in the NOx sensor 2 is used at a temperature within a range of 600 to 850 °C.

A description will now be given of effects of the first exemplary embodiment. As previously described, there is the constant relationship between the air fuel ratio A/F of the exhaust gas g, the concentration $c_2$ of the $NH_3$ contained in the outside exhaust gas which is present around the NOx sensor, not inside of the NOx sensor, and the concentration $c_3$ of the derived NO which has been derived from $NH_3$. For this reason, it is possible to calculate the concentration $c_3$ of the derived NO on the basis of the detected air fuel ratio A/F of the exhaust gas g and the detected concentration $c_2$ of the $NH_3$ contained in the outside exhaust gas. Further, the derived NO which has been derived from $NH_3$ is subtracted from the sum concentration $c_4$ (which is a sum of the concentration $c_1$ of the combustion derived NOx and the concentration $c_3$ of the derived NO which has been derived from $NH_3$) measured by the NOx sensor 2. It is possible to measure the concentration $c_1$ of the combustion derived NOx with high accuracy on the basis of this subtraction.

Similarly, because there is the constant relationship between the concentration of $O_2$ in the exhaust gas g and the concentration $c_3$ of the derived NO which has been derived from $NH_3$, it is possible to calculate the concentration $c_3$ of the derived NO by measuring the concentration of $O_2$ and the concentration $c_2$ of the $NH_3$ contained in the outside exhaust gas. Further, because there is the constant relationship between the concentration of $H_2O$ in the exhaust gas g, the concentration $c_2$ of the $NH_3$ contained in the outside exhaust gas and the concentration $c_3$ of the derived NO which has been derived from $NH_3$, it is possible to calculate the concentration $c_3$ of the derived NO by measuring the concentration of $H_2O$ and the concentration $c_2$ of the $NH_3$ contained in the outside exhaust gas. It is therefore possible to calculate the concentration $c_1$ of the combustion derived NOx with high accuracy by subtracting the obtained concentration $c_3$ of the derived NO from the sum concentration $c_4$.

As previously described, the first exemplary embodiment can calculate the concentration $c_1$ of the combustion derived NOx with high accuracy because the concentration $c_3$ of the derived NO is calculated by using the concentration $c_2$ of the $NH_3$ contained in the outside exhaust gas and one of the air fuel ratio A/F of the exhaust gas g, the concentration of $O_2$ and the concentration of $H_2O$, and the concentration $c_3$ of the derived NO is subtracted from the sum concentration $c_4$. It is also acceptable to combine the air fuel ratio A/F, the concentration of $O_2$ and the concentration of $H_2O$ when the concentration $c_3$ of the derived NO is calculated.

As shown in FIG. 23, if the concentration $c_2$ of the $NH_3$ contained in the outside exhaust gas is subtracted from the sum concentration $c_4$ without calculating the concentration $c_3$ of the derived NO, there is a high possibility in which the calculated concentration ci' of the combustion derived NOx is smaller than the concentration c1 of actual NOx. That is, because a part of $NH_3$ becomes $N_2$, the concentration $c_3$ of the derived NO becomes smaller than the concentration $c_2$ of the $NH_3$ contained in the outside exhaust gas. However, the first exemplary embodiment calculates the concentration $c_3$ of the derived NO with high accuracy, and the calculation result is subtracted from the sum concentration $c_4$, therefore it is possible to measure the concentration $c_1$ of the combustion derived NOx with high accuracy.

The first exemplary embodiment performs the subtraction of the concentration $c_3$ of the derived NO from the sum concentration $c_4$. However, the concept of the present invention is not limited by the first exemplary embodiment. For example, it is possible to prepare in advance a database storing data regarding the relationship between the sum concentration $c_4$, the concentration $c_3$ of the derived NO and the concentration $c_1$ of the combustion derived NOx, and to obtain with high accuracy the concentration $c_1$ of the combustion derived NOx by using the database, the sum concentration $c_4$ and the concentration $c_3$ of the derived NO. On the other hand, the first exemplary embodiment performs the subtraction previously described without using such a data base, and stores the database into the memory section 6 (see FIG. 1).

When using the concentration of $O_2$ or the concentration of $H_2O$, the first exemplary embodiment measures the air fuel ratio A/F, and calculates the concentration of $O_2$ and the concentration of $H_2O$ by using the detected air fuel ratio A/F. This method can eliminate additional $O_2$ sensor and $H_2O$ sensor, and produces the NOx concentration measurement system 1 with low manufacturing costs.

It is possible to form the calculation section 7 to calculate the concentration of the derived NO which has been derived from $NH_3$ by using the concentration of $O_2$ and the concentration of the $NH_3$ contained in the outside exhaust gas. Similarly, it is possible to form the calculation section 7 to calculate the concentration of the derived NO by using the concentration of $H_2O$ and the concentration of the $NH_3$ contained in the outside exhaust gas. Because this structure does not use both the concentration of $H_2O$ and the concentration of $O_2$, it is possible to simply calculate the concentration of the derived NO, and this accordingly makes it possible to increase a calculation speed to calculate the concentration of the derived NO.

**[0058]** Further, when using the air fuel ratio A/F, the first exemplary embodiment measures the pump cell current Ip which flows in the pump cell 26p of the NOx sensor, and calculates the air fuel ratio A/F by using the measured pump cell current Ip. This structure makes it possible to produce and provide the NOx concentration measurement system 1 with low manufacturing costs.

Still further, the first exemplary embodiment uses the trap layer 291 (see FIG. 1) having a thickness of not more than 1,200 $\mu$m. As shown in FIG. 13, when the trap layer 291 has the thickness of not more than 1,200 $\mu$m, the $NH_3$ detection sensitivity of the NOx sensor 2 for detecting $NH_3$ does not greatly vary due to the thickness of the trap layer 129. If the thickness of the trap layer 129 exceeds 1,200 $\mu$m, the $NH_3$ detection sensitivity of the NOx sensor 2 for detecting $NH_3$ is reduced because more thermal energy is supplied to the exhaust gas g when the exhaust gas g passes through the trap layer 291, which promotes conversion of $NH_3$ to $N_2$. However, when the trap layer 291 has the thickness of not more than 1,200 $\mu$m, the $NH_3$ detection sensitivity of the NOx sensor 2 is not significantly affected by the thickness of the trap layer 291. For this reason, it is possible to measure the concentration $c_3$ of the derived NO by using the equation (4) previously described.

Still further, the first exemplary embodiment uses the diffusion layer 291 (see FIG. 1) having the thickness of not more than 5 mm. The structure, in which the thickness of the diffusion layer 292 is adequately reduces to be not more than 5 mm, makes it possible to easily reduce variation of the $NH_3$ detection sensitivity of the NOx sensor 2. Because an amount of the exhaust gas g per unit time period to be introduced into the gas chamber 20 is increased, this structure makes it possible for the large sensor current Is to flow in the sensor cell 26s.

Still further, the first exemplary embodiment uses the trap layer 291 and the diffusion layer 292 which have a porosity within a range of 10 to 90 %. This structure makes it possible to easily produce the trap layer 291 and the diffusion layer 292.

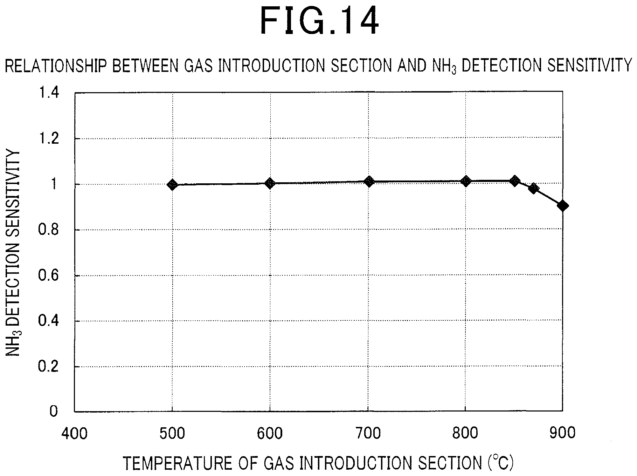

Still further, in the first exemplary embodiment, the gas introduction section 29 (see FIG. 1) has a temperature within a range of 600 to 850 °C when the NOx sensor 2 is used. As shown in FIG. 14, when the gas introduction section 29 is used at a temperature within a range of 600 to 850 °C, the $NH_3$ detection sensitivity of the NOx sensor 2 for detecting $NH_3$ do not greatly vary due to this temperature of the gas introduction section 29. If the gas introduction section 29 has a temperature of not less than 850 °C, the exhaust gas g easily receives thermal energy when the exhaust gas g passes through the gas introduction section 29. In this case, because $NH_3$ is easily converted to $N_2$, this structure makes it possible to easily reduce the $NH_3$ detection sensitivity of the NOx sensor 2 for detecting $NH_3$. On the other hand, when the gas introduction section 29 has a temperature within a range of 600 to 850 °C, this structure makes it possible to reduce the $NH_3$ detection sensitivity of the NOx sensor 2, and to calculate the concentration $c_3$ of the derived NO with high accuracy.

It is possible to store into the memory section 6 data items regarding a slope of a graph when the temperature of the gas introduction section exceeds 850 °C shown in FIG. 14. When the temperature of the gas introduction section exceeds 850 °C, the $NH_3$ detection sensitivity of the NOx sensor 2 is calculated by using the graph stored in the memory section 6. In this case, it is acceptable to compensate the concentration $c_3$ of the derived NO on the basis of the calculation result of the $NH_3$ detection sensitivity of the NOx sensor 2.

As will be explained later in a second experimental example, there is a constant relationship between a flow speed of the exhaust gas g, and a conversion rate of converting $NH_3$ to NO. Accordingly, an additional sensor is used for detecting a flow speed of the exhaust gas g, and it is acceptable to compensate the concentration $c_3$ of the derived NO by using the measured flow speed of the exhaust gas g. This structure makes it possible to calculate the concentration of the combustion derived NOx with high accuracy.

As previously described, the first exemplary embodiment provides the NOx concentration measurement system capable of measuring a concentration of NOx contained in the exhaust gas g which contains NOx and $NH_3$ with higher accuracy.

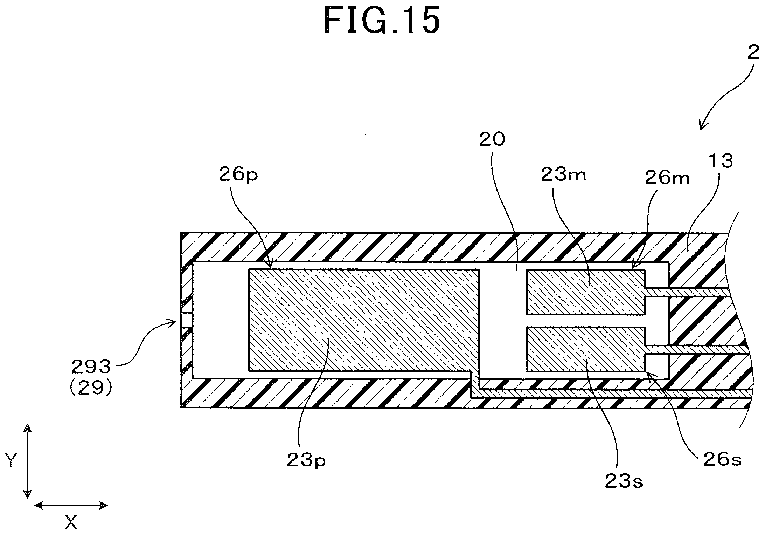

The gas introduction section 29 according to the first exemplary embodiment shown in FIG. 1 has the trap layer 291 and the diffusion layer 292. However, the concept of the present invention is not limited by the first exemplary embodiment. For example, as shown in FIG. 15, it is possible to form an aperture section 293 which allows the gas chamber 20 to communicate with an external space which is outside of the NOx sensor 2 in order to limit the entering speed of the exhaust gas g. When the aperture section 293 is formed in the NOx sensor 2, convection of the exhaust gas g is generated at the aperture section 293, and there is a possible case in which the exhaust gas g receives heat energy supplied from surrounding exhaust gas, and a part of $NH_3$ in the exhaust gas g is converted to $N_2$. In this case, it is possible for the present invention to measure the concentration $c_1$ of the combustion derived NOx with high accuracy. It is acceptable to eliminate the trap layer 291 from the gas introduction section 29.

The first exemplary embodiment uses the NOx sensor 2 to measure the air fuel ratio A/F, and calculate the concentration of $O_2$ and the concentration of $H_2O$ in the exhaust gas g on the basis of the exhaust gas g. However, the concept of the present invention is not limited by the first exemplary embodiment. For example, it is acceptable to use an additional A/F sensor to detect the air fuel ratio A/F, and calculate the concentration of $O_2$ and the concentration of $H_2O$ on the basis of the detected air fuel ratio A/F.

(First experimental example)

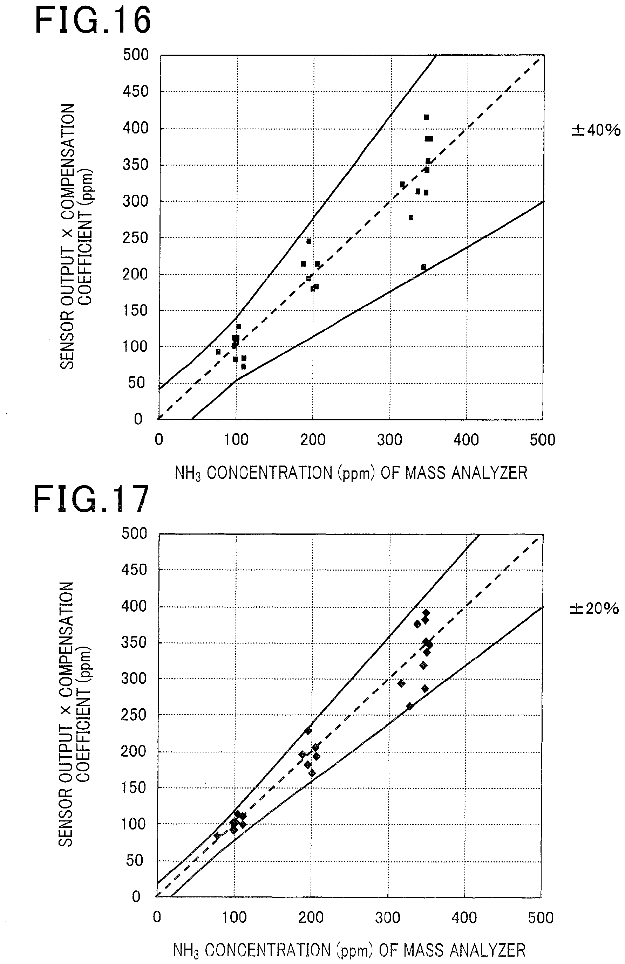

An experiment has been performed to verify the effects of the NOx concentration measurement system according to the present invention. A test gas was prepared, containing $NH_3$ only without NOx. The NOx sensor 2 having the structure according to the first exemplary embodiment previously described measured a concentration of the test gas. In the measurement of a concentration of the test gas by using the NOx sensor 2, $NH_3$ contained in the test was converted to NO in the gas introduction section 29. The NOx sensor 2 measured a concentration of the converted NO. Various test gases was prepared to have an $NH_3$ concentration of 100 ppm, 200 ppm, and 350 ppm, respectively. FIG. 16 and FIG. 17 show a relationship between a concentration of NO, which has been measured by the NOx sensor 2, and a concentration of $NH_3$ in the test gas.

The experiment shown in FIG. 16 did not compensate the concentration of NO. That is, the experiment shown in FIG. 16 did not perform a multiplication of the concentration of NO measured by the NOx sensor 2 with a $NH_3$ detection sensitivity previously described. On the other hand, the experiment shown in FIG. 17 has compensated the concentration of NO by using the air fuel ratio A/F. That is, the experiment shown in FIG. 17 has detected the air fuel ratio A/F, and calculated the $NH_3$ detection sensitivity on the basis of the detected air fuel ratio A/F. Further, the experiment shown in FIG. 17 performed the multiplication of the obtained $NH_3$ detection sensitivity with the measured concentration of NO.

**[0070]** Both the experiments shown in FIG. 16 and FIG. 17 compensated the measurement values with a compensation coefficient so that an average value of the slope of the graphs thereof was 1.

As shown in FIG. 16, when no compensation to the concentration of NO has performed, the measured values of the concentration of NO have greatly varied. In the graph shown in FIG. 16, the variation of the measurement values becomes approximately 40 %. A part of $NH_3$ has been converted to $N_2$ due to the influence of $O_2$ and $H_2O$ present in the test gas. For this reason, when no compensation using the air fuel ratio A/F is performed, the measurement values of the NOx sensor 2 vary due to the variation of the concentration of $O_2$ and the concentration of $H_2O$.

On the other hand, as shown in FIG. 17, when performing the compensation by using the air fuel ratio A/F, the obtained concentration of NO has a small variation. In the graph shown in FIG. 17, the variation of the measured values becomes within approximately 20 %. Because the case shown in FIG. 17 performed the compensation using the air fuel ratio A/F, the measured values of the NOx sensor 2 were affected by the variation of the concentration of $O_2$ and the concentration of $H_2O$. For this reason, it can be considered that the measured values of the NOx sensor 2 have a small variation.

As the experiment previously described, it can be understood for the use of the air fuel ratio A/F to perform with high accuracy the calculation of the concentration of NO which has been converted from $NH_3$, i.e. the concentration

$c_3$ of the derived NO which has been derived from $NH_3$. This makes it possible to subtract the accurate concentration $c_3$ of the derived NO from the sum concentration $c_4$ which have been measured by the NOx sensor 2 during the measurement of the exhaust gas g which contains NOx and $NH_3$, and as a result to calculate the concentration $c_1$ of combustion derived NOx with high accuracy.

(Second exemplary experiment)

The second exemplary experiment has considered a relationship between a flow speed of the exhaust gas g and a ratio of changing $NH_3$ contained in the exhaust gas g to NO. Instead of using the gas introduction section 29 of the NOx sensor 2, the second exemplary experiment has prepared a quartz tube 299 and a trap layer 290 made of alumina arranged in the quartz tube 299. The quartz tube 299 has been arranged in the inside of the heater section 10. Test gas which contained $NH_3$ and $N_2$, but did not contained NOx was supplied to the quartz tube 299. A mass analyzer 109 was measured a concentration of NO which has been generated by converting $NH_3$ in the trap layer 290 to NO.

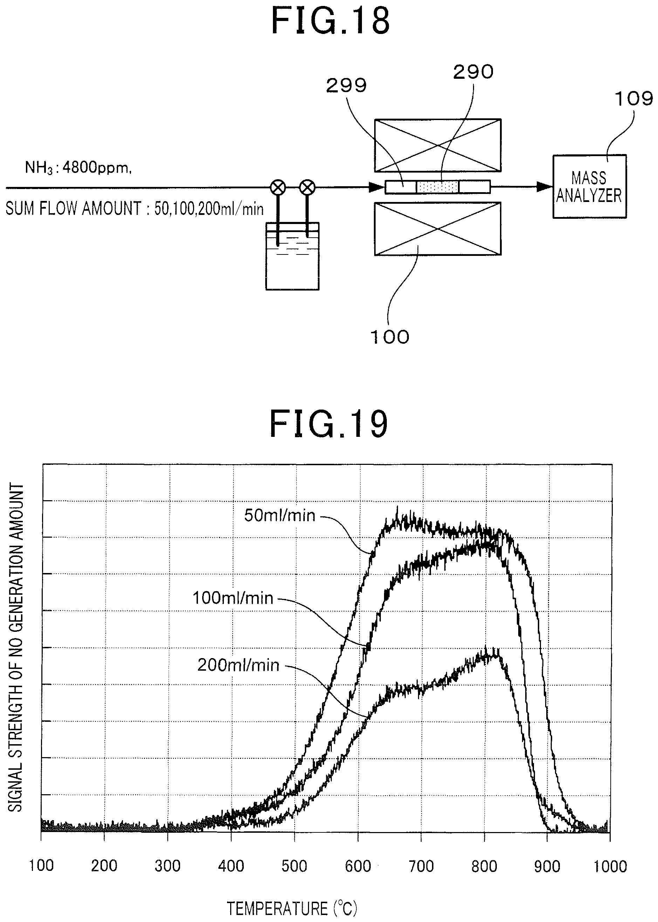

**[0075]** The test gas had the $NH_3$ concentration of 4,800 ppm and the $O_2$ concentration of 0 % and the $H_2O$ concentration of 0 % before supplied to the quartz tube 299. The test gas had the flow speed of 50, 100, and 200 $ml^3$ / min. The trap layer 290 had a temperature within a range of 100 °C to 1,000 °C. FIG. 19 shows the experimental results of the second exemplary experiment.

As shown in FIG. 19, it can be understood that the higher the flow speed of the test gas, the lower the ratio of converting $NH_3$ to NO. This means that the exhaust gas passed through the trap layer 290 before the conversion of $NH_3$ to NO when the flow speed of the test gas is high. The same influence caused by the flow speed of the test gas occurs when the test gas contains $O_2$ and $H_2O$.

It can be understood to calculate the concentration $c_3$ of the derived NO with higher accuracy by measuring the flow speed of the exhaust gas g and performing the compensation of the concentration $c_3$ of the derived NO on the basis of the measured flow speed of the exhaust gas g. Accordingly, it is possible to more enhance the calculation accuracy of the concentration $c_1$ of the combustion derived NOx

(Second exemplary embodiment)

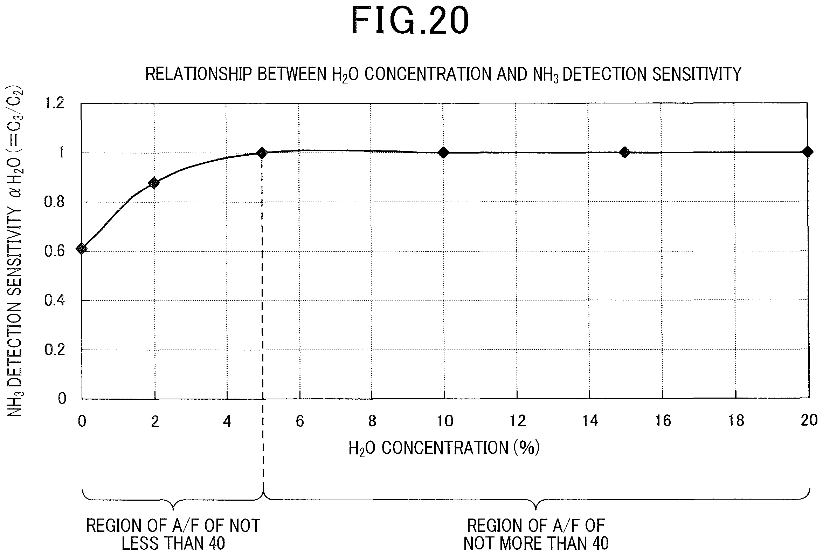

The NOx concentration measurement system according to the second exemplary embodiment selects one of the concentration of $H_2O$ and a concentration of $O_2$ on the basis of the air fuel ratio A/F of the exhaust gas g. The second exemplary embodiment will be explained with reference to FIG. 20. FIG. 20 shows a graph of the $H_2O$ concentration and the $NH_3$ detection sensitivity in which the lateral axis is divided into the region having the air fuel ratio A/F of not less than 40 and the region having the air fuel ratio A/F of not more than 40. As can be understood from FIG. 20, in the region having the air fuel ratio A/F of not less than 40, the $NH_3$ detection sensitivity of the NOx sensor has greatly varied when the $H_2O$ concentration has slightly varied. On the other hand, in the region having the air fuel ratio A/F of not more than 40, the $NH_3$ detection sensitivity of the NOx sensor did not vary when the $H_2O$ concentration was varied. Accordingly, it is possible to calculate the $NH_3$ detection sensitivity with high accuracy when the $NH_3$ detection sensitivity is calculated by using the $H_2O$ concentration during the region having the air fuel ratio A/F of not less than 40, i.e. during the region in which the $NH_3$ detection sensitivity greatly varies only by a small variation of the $H_2O$ concentration. This makes it possible to measure the concentration $c_3$ of the derived NO with high accuracy, and to measure the concentration $c_1$ of the combustion derived NOx with more high accuracy.

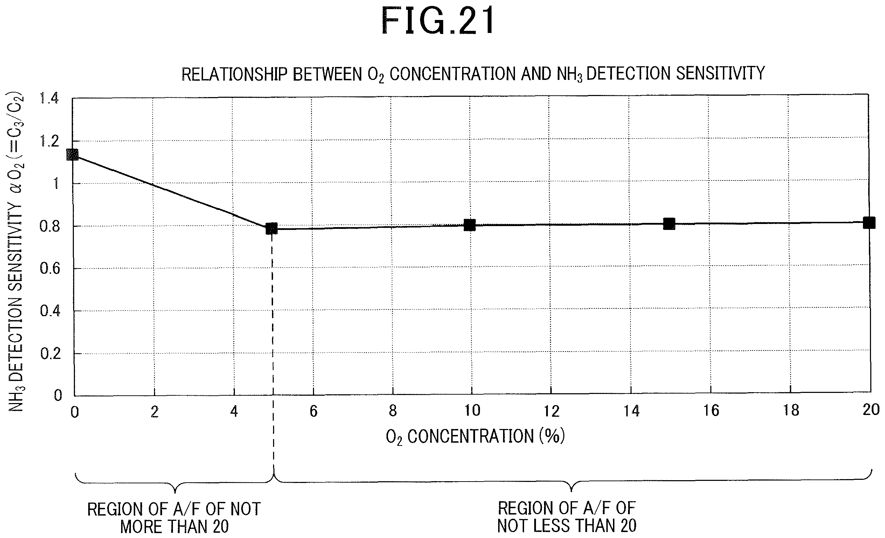

FIG. 21 shows a graph of the $O_2$ concentration and the $NH_3$ detection sensitivity in which the lateral axis is divided into the region having the air fuel ratio A/F of not less than 20 and the region having the air fuel ratio A/F of not more than 20.

As can be understood from FIG. 21, in the region having the air fuel ratio A/F of not more than 20, the $NH_3$ detection sensitivity of the NOx sensor has greatly varied when the $O_2$ concentration has slightly varied. On the other hand, in the region having the air fuel ratio A/F of not less than 20, the $NH_3$ detection sensitivity of the NOx sensor has not varied when the $O_2$ concentration has varied. Accordingly, it is possible to calculate the $NH_3$ detection sensitivity with high accuracy when the $NH_3$ detection sensitivity is calculated by using the $O_2$ concentration in the region having the air fuel ratio A/F of not more than 20, i.e. in the region in which the $NH_3$ detection sensitivity greatly varies only a small variation of the $O_2$ concentration. This makes it possible to measure the concentration $c_3$ of the derived NO with high accuracy, and to measure the concentration $c_1$ of the combustion derived NOx with more high accuracy.

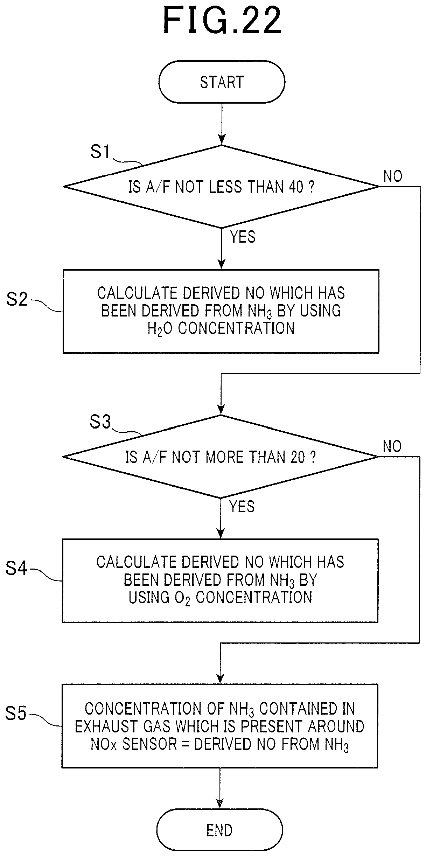

FIG. 22 shows a flow chart of the calculation section 7 (see FIG. 1) according to the second exemplary embodiment. As shown in FIG. 22, it is detected whether the air fuel ratio A/F is not less than 40 in step S1. When the detection result indicates affirmation, i.e. YES, the operation flow progresses to step S2. In step S2, the concentration $c_3$ of the derived NO is calculated by using the $H_2O$ concentration.

On the other hand, when the detection result indicates negation, i.e. NO, the operation flow progresses to step S3. In step S3, it is detected whether the air fuel ratio A/F is not more than 20. When the detection result indicates affirmation, i.e. YES, the operation flow progresses to step S4. In step S4, the $NH_3$ concentration is calculated by using the $O_2$ concentration. When the detection result in step S3 indicates negation, i.e. NO, the operation flow progresses to step S5. In step S5, no compensation is executed, i.e. a multiplication of the concentration $c_2$ of the $NH_3$ contained in the outside exhaust gas with the $NH_3$ concentration is not executed. That is, the concentration $c_1$ of the combustion derived NOx is calculated under the condition in which the concentration $c_2$ of the $NH_3$ contained in the outside exhaust gas and the concentration $c_3$ of the derived NO have the same value.

As previously described, the second exemplary embodiment selects one having a high calculation accuracy from the $O_2$ concentration and the $NH_3$ concentration, and calculates the concentration $c_3$ of the derived NO by using the selected one. That is, the second exemplary embodiment uses the $O_2$ concentration when the air fuel ratio A/F is not more than 20, and calculates the $NH_3$ detection sensitivity. The second exemplary embodiment calculates the concentration $c_3$ of the derived NO on the basis of the obtained $NH_3$ detection sensitivity. This structure makes it possible to calculate the concentration $c_3$ of the derived NO and the concentration $c_1$ of the combustion derived NOx with high accuracy. In addition to this, the second exemplary embodiment has the same effects of the first exemplary embodiment previously described.

[Reference Signs List]

1 NOx concentration measurement system,
2 Nox sensor,
20 Gas chamber,
21 Reference gas chamber,
26s Sensor cell,
29 Gas introduction section,
3 Detection section,
5 $NH_3$ concentration estimation section, and
7 Calculation section.

This application is a divisional application of European patent application no. 15 783 318.7 (the "parent application"), also published under no. EP-A-3 136 091. The original claims of the parent application are repeated below in the form of items and form part of the content of the description of this divisional application as filed.

[Item 1]
A NOx concentration measurement system (1) capable of measuring a concentration of NOx contained in exhaust gas which contains NOx and $NH_3$, comprising a NOx sensor (2), a detection section (3), a $NH_3$ concentration estimation section (5), and a calculation section (7), wherein
the NOx sensor (2) comprises: a gas chamber (20) into which exhaust gas is introduced; a sensor cell (26s) having a solid electrolyte body of oxygen ion conductivity having a plate shape, on the surfaces of which electrodes are formed; and a gas introduction section (29) through which the exhaust gas is introduced into the gas chamber (20),
the NOx sensor (2) measures a sum concentration of a concentration of combustion derived NOx as NOx, which has being contained in the exhaust gas, and a concentration of derived NO which has been derived from $NH_3$ as a concentration of NO generated by oxidization of the $NH_3$, and
the detection section (3) detects at least one of an air fuel ratio (A/F) of the exhaust gas, a concentration of $O_2$ contained in the exhaust gas and a concentration of $H_2O$ contained in the exhaust gas,
the $NH_3$ concentration estimation section (5) estimates a concentration of $NH_3$ contained in outside exhaust gas which is present around the NOx sensor, not inside of the NOx sensor before the outside exhaust gas is introduced into the gas introduction section (29) of the NOx sensor,
the calculation section (7) calculates the concentration of the derived NO which has been derived from $NH_3$ on the basis of the concentration of the $NH_3$ contained in the outside exhaust gas and at least one of the air fuel ratio, the concentration of $O_2$ and the concentration of $H_2O$, and
the calculation section (7) calculates the concentration of the combustion derived NOx on the basis of the sum concentration and the concentration of the derived NO which has been derived from $NH_3$.

[Item 2]
The NOx concentration measurement system (1) according to item 1, wherein the calculation section (7) subtracts the concentration of the derived NO which has been derived from $NH_3$ from the sum concentration, and calculates the concentration of the combustion derived NOx by using the subtraction result.

[Item 3]
The NOx concentration measurement system (1) according to item 1 or 2, wherein the detection section (3) detects the air fuel ratio (A/F) of the exhaust gas, and calculates at least one of the concentration of $O_2$ and the concentration of $H_2O$ on the basis of the detected air fuel ratio (A/F).

[Item 4]
The NOx concentration measurement system (1) according to any one of items 1 to 3, wherein the NOx sensor (2) is equipped with a pump cell (26p) of adjusting the concentration of $O_2$ contained in the exhaust gas, and
the detection section (3) is configured to measure a pump cell current (Ip) which flows in the pump cell (26p) to obtain the air fuel ratio (A/F) of the exhaust gas.

[Item 5]
The NOx concentration measurement system (1) according to any one of items 1 to 4, wherein the gas introduction section (29) is configured to have a temperature within a range of 600 to 850 °C during the use of the NOx sensor (2).

[Item 6]
The NOx concentration measurement system (1) according to any one of items 1 to 5, wherein the gas introduction section (29) of the NOx sensor (2) is composed of at least one of a trap layer (291) and a diffusion layer (292), where the trap layer (291) has a porosity within a range of 10 to 90 % and traps poison material contained in the exhaust gas, and the diffusion layer (292) has a porosity within a range of 10 to 90 % and limits a flow speed of the exhaust gas to be introduced into the gas chamber (20).

[Item 7]
The NOx concentration measurement system (1) according to item 6, wherein the trap layer (291) has a thickness of not more than 1200 $\mu$m, and the diffusion layer (292) has a thickness of not more than 5 mm.

[Item 8]
The NOx concentration measurement system (1) according to any one of items 1 to 7, wherein the calculation section (7) is configured to calculate the concentration of the derived NO which has been derived from $NH_3$ by using the concentration of $O_2$ and the concentration of the $NH_3$ contained in the exhaust gas outside of the NOx sensor (2).

[Item 9]
The NOx concentration measurement system (1) according to any one of items 1 to 7, wherein the calculation section (7) is configured to calculate the concentration of the derived NO which has been derived from $NH_3$ by using the concentration of $H_2O$ and the concentration of the $NH_3$ contained in the exhaust gas outside of the NOx sensor (2).

[Item 10]
The NOx concentration measurement system (1) according to any one of items 1 to 7, wherein the calculation section (7) is configured to select one of the concentration of $O_2$ and the concentration of $H_2O$ so that the calculated concentration of the derived NO which has been derived from $NH_3$ has a higher accuracy.

**Claims**

1.  A NOx concentration measurement system (1) capable of measuring a concentration of NOx contained in exhaust gas which contains NOx and $NH_3$, comprising a NOx sensor (2), a detection section (3), a $NH_3$ concentration detection section, and a calculation section (7),
    wherein
    the NOx sensor (2) comprises: a gas chamber (20) into which exhaust gas is introduced; a sensor cell (26s) having a solid electrolyte body of oxygen ion conductivity having a plate shape, on the surfaces of which electrodes are formed; and a gas introduction section (29) through which the exhaust gas is introduced into the gas chamber (20), the NOx sensor (2) is configured to measure a sum concentration of a concentration of combustion derived NOx as NOx, which has being contained in the exhaust gas, and a concentration of derived NO which has been derived from $NH_3$ as a concentration of NO generated by oxidization of the $NH_3$, and
    the detection section (3) is configured to detect at least one of an air fuel ratio (A/F) of the exhaust gas, a concentration of $O_2$ contained in the exhaust gas, a concentration of $H_2O$ contained in the exhaust gas and a flow speed of exhaust gas,
    the $NH_3$ concentration detection section is configured to detect a concentration of $NH_3$ contained in outside exhaust gas which is present around the NOx sensor, not inside of the NOx sensor before the outside exhaust gas is introduced into the gas introduction section (29) of the NOx sensor,
the calculation section (7) is configured to calculate the concentration of the derived NO which has been derived from $NH_3$ on the basis of the concentration of the $NH_3$ contained in the outside exhaust gas and at least one of the air fuel ratio, the concentration of $O_2$, the concentration of $H_2O$ and the flow speed of exhaust gas,
the calculation section (7) is configured to calculate the concentration of the combustion derived NOx on the basis of the sum concentration and the concentration of the derived NO which has been derived from $NH_3$.

2. A NOx concentration measurement system (1) capable of measuring a concentration of NOx contained in exhaust gas which contains NOx and $NH_3$, comprising a NOx sensor (2), a detection section (3), a $NH_3$ concentration estimation section (5), and a calculation section (7), wherein
the NOx sensor (2) comprises: a gas chamber (20) into which exhaust gas is introduced; a sensor cell (26s) having a solid electrolyte body of oxygen ion conductivity having a plate shape, on the surfaces of which electrodes are formed; and a gas introduction section (29) through which the exhaust gas is introduced into the gas chamber (20),
the NOx sensor (2) is configured to measure a sum concentration of a concentration of combustion derived NOx as NOx, which has being contained in the exhaust gas, and a concentration of derived NO which has been derived from $NH_3$ as a concentration of NO generated by oxidization of the $NH_3$, and
the detection section (3) is configured to detect at least one of an air fuel ratio (A/F) of the exhaust gas, a concentration of $O_2$ contained in the exhaust gas, a concentration of $H_2O$ contained in the exhaust gas and a flow speed of exhaust gas,
the $NH_3$ concentration estimation section (5) is configured to estimate a concentration of $NH_3$ contained in outside exhaust gas which is present around the NOx sensor, not inside of the NOx sensor before the outside exhaust gas is introduced into the gas introduction section (29) of the NOx sensor,
the calculation section (7) is configured to calculate the concentration of the derived NO which has been derived from $NH_3$ on the basis of the concentration of the $NH_3$ contained in the outside exhaust gas and at least one of the air fuel ratio, the concentration of $O_2$, the concentration of $H_2O$ and the flow speed of exhaust gas, and
the calculation section (7) is configured to calculate the concentration of the combustion derived NOx on the basis of the sum concentration and the concentration of the derived NO which has been derived from $NH_3$.

3. A NOx concentration measurement system (1) capable of measuring a concentration of NOx contained in exhaust gas which contains NOx and $NH_3$, comprising a NOx sensor (2), a detection section (3), a flow speed detection section, a $NH_3$ concentration estimation section (5), and a calculation section (7), wherein
the NOx sensor (2) comprises: a gas chamber (20) into which exhaust gas is introduced; a sensor cell (26s) having a solid electrolyte body of oxygen ion conductivity having a plate shape, on the surfaces of which electrodes are formed; and a gas introduction section (29) through which the exhaust gas is introduced into the gas chamber (20),
the NOx sensor (2) is configured to measure a sum concentration of a concentration of combustion derived NOx as NOx, which has being contained in the exhaust gas, and a concentration of derived NO which has been derived from $NH_3$ as a concentration of NO generated by oxidization of the $NH_3$, and
the detection section (3) is configured to detect at least one of an air fuel ratio (A/F) of the exhaust gas, a concentration of $O_2$ contained in the exhaust gas and a concentration of $H_2O$ contained in the exhaust gas,
the flow speed detection section is configured to detect a flow speed of exhaust gas,
the $NH_3$ concentration estimation section (5) is configured to estimate a concentration of $NH_3$ contained in outside exhaust gas which is present around the NOx sensor, not inside of the NOx sensor before the outside exhaust gas is introduced into the gas introduction section (29) of the NOx sensor,
the calculation section (7) is configured to calculate the concentration of the derived NO which has been derived from $NH_3$ on the basis of the concentration of the $NH_3$ contained in the outside exhaust gas, the flow speed of exhaust gas and at least one of the air fuel ratio, the concentration of $O_2$ and the concentration of $H_2O$, and
the calculation section (7) is configured to calculate the concentration of the combustion derived NOx on the basis of the sum concentration and the concentration of the derived NO which has been derived from $NH_3$.

4. A NOx concentration measurement system (1) capable of measuring a concentration of NOx contained in exhaust gas which contains NOx and $NH_3$, comprising a NOx sensor (2), a detection section (3), a flow speed detection section, a $NH_3$ concentration detection section (5), and a calculation section (7), wherein
the NOx sensor (2) comprises: a gas chamber (20) into which exhaust gas is introduced; a sensor cell (26s) having a solid electrolyte body of oxygen ion conductivity having a plate shape, on the surfaces of which electrodes are formed; and a gas introduction section (29) through which the exhaust gas is introduced into the gas chamber (20),
the NOx sensor (2) is configured to measure a sum concentration of a concentration of combustion derived NOx as NOx, which has being contained in the exhaust gas, and a concentration of derived NO which has been derived

from NH$_3$ as a concentration of NO generated by oxidization of the NH$_3$, and

the detection section (3) is configured to detect at least one of an air fuel ratio (A/F) of the exhaust gas, a concentration of O$_2$ contained in the exhaust gas and a concentration of H$_2$O contained in the exhaust gas,

the flow speed detection section is configured to detect a flow speed of exhaust gas,

the NH$_3$ concentration detection section (5) is configured to detect a concentration of NH$_3$ contained in outside exhaust gas which is present around the NOx sensor, not inside of the NOx sensor before the outside exhaust gas is introduced into the gas introduction section (29) of the NOx sensor,

the calculation section (7) is configured to calculate the concentration of the derived NO which has been derived from NH$_3$ on the basis of the concentration of the NH$_3$ contained in the outside exhaust gas, the flow speed of exhaust gas, and at least one of the air fuel ratio, the concentration of O$_2$ and the concentration of H$_2$O, and

the calculation section (7) is configured to calculate the concentration of the combustion derived NOx on the basis of the sum concentration and the concentration of the derived NO which has been derived from NH$_3$.

**Patentansprüche**

1. NOx-Konzentrationsmesssystem (1), das eine Konzentration von NOx, das in einem Abgas enthalten ist, das NOx und NH$_3$ enthält, messen kann und das einen NOx-Sensor (2), einen Erfassungsbereich (3), einen NH$_3$-Konzentrationserfassungsbereich und einen Berechnungsbereich (7) aufweist, wobei

der NOx-Sensor (2) Folgendes aufweist: eine Gaskammer (20), in die ein Abgas eingeleitet wird; eine Sensorzelle (26s), die einen Festelektrolytkörper mit einer Sauerstoffionenleitfähigkeit hat, der eine Plattenform hat und an dessen Oberflächen Elektroden ausgebildet sind; und einen Gaseinleitungsbereich (29), durch den das Abgas in die Gaskammer (20) eingeleitet wird,

der NOx-Sensor (2) gestaltet ist, um eine Summenkonzentration aus einer Konzentration von verbrennungsabgeleitetem NOx als NOx, das in dem Abgas enthalten war, und einer Konzentration von abgeleitetem NO, das von NH$_3$ abgeleitet worden ist, als eine Konzentration von NO, das durch Oxidation des NH$_3$ erzeugt wird, zu messen, und

der Erfassungsbereich (3) gestaltet ist, um wenigstens einen Parameter von den Parametern Luft/Kraftstoff-Verhältnis (A/F) des Abgases, Konzentration von O$_2$, das in dem Abgas enthalten ist, Konzentration von H$_2$O, das in dem Abgas enthalten ist, und Strömungsgeschwindigkeit des Abgases zu erfassen,

der NH$_3$-Konzentrationserfassungsbereich gestaltet ist, um eine Konzentration von NH$_3$, das in einem sich außen befindlichen Abgas enthalten ist, das um den NOx-Sensor herum und nicht im Inneren des NOx-Sensors vorhanden ist, zu erfassen, bevor das sich außen befindliche Abgas in den Gaseinleitungsbereich (29) des NOx-Sensors eingeleitet wird,

der Berechnungsbereich (7) gestaltet ist, um die Konzentration des abgeleiteten NO, das von NH$_3$ abgeleitet worden ist, auf der Basis von der Konzentration des NH$_3$, das in dem sich außen befindlichen Abgas enthalten ist, und wenigstens einem Parameter von den Parametern Luft/KraftstoffVerhältnis, Konzentration von O$_2$, Konzentration von H$_2$O und Strömungsgeschwindigkeit des Abgases zu berechnen,

der Berechnungsbereich (7) gestaltet ist, um die Konzentration des verbrennungsabgeleiteten NOx auf der Basis der Summenkonzentration und der Konzentration des abgeleiteten NO, das von NH$_3$ abgeleitet worden ist, zu berechnen.

2. NOx-Konzentrationsmesssystem (1), das eine Konzentration von NOx, das in einem Abgas enthalten ist, das NOx und NH$_3$ enthält, messen kann und einen NOx-Sensor (2), einen Erfassungsbereich (3), einen NH$_3$-Konzentrationsschätzbereich (5) und einen Berechnungsbereich (7) aufweist, wobei

der NOx-Sensor (2) Folgendes aufweist: eine Gaskammer (20), in die ein Abgas eingeleitet wird; eine Sensorzelle (26s), die einen Festelektrolytkörper mit einer Sauerstoffionenleitfähigkeit hat, der eine Plattenform hat und an dessen Oberflächen Elektroden ausgebildet sind; und einen Gaseinleitungsbereich (29), durch den hindurch das Abgas in die Gaskammer (20) eingeleitet wird,

der NOx-Sensor (2) gestaltet ist, um eine Summenkonzentration aus einer Konzentration von verbrennungsabgeleitetem NOx als NOx, das in dem Abgas enthalten war, und einer Konzentration von abgeleitetem NO, das von NH$_3$ abgeleitet worden ist, als eine Konzentration von NO, das durch Oxidation des NH$_3$ erzeugt wird, zu messen, und

der Erfassungsbereich (3) gestaltet ist, um wenigstens einen Parameter von den Parametern Luft/Kraftstoff-Verhältnis (A/F) des Abgases, Konzentration von O$_2$, das in dem Abgas enthalten ist, Konzentration von H$_2$O, das in dem Abgas enthalten ist, und Strömungsgeschwindigkeit des Abgases zu erfassen,

der NH$_3$-Konzentrationsschätzbereich (5) gestaltet ist, um eine Konzentration von NH$_3$, das in einem sich außen befindlichen Abgas enthalten ist, das um den NOx-Sensor herum und nicht im Inneren des NOx-Sensors vorhanden ist, zu schätzen, bevor das sich außen befindliche Abgas in den Gaseinleitungsbereich (29) des NOx-Sensors eingeleitet wird,

der Berechnungsbereich (7) gestaltet ist, um die Konzentration des abgeleiteten NO, das von NH$_3$ abgeleitet worden ist, auf der Basis der Konzentration des NH$_3$, das in dem sich außen befindlichen Abgas enthalten ist, und wenigstens einem Parameter von den Parametern Luft/KraftstoffVerhältnis, Konzentration von O$_2$, Konzentration von H$_2$O und Strömungsgeschwindigkeit des Abgases zu berechnen, und

der Berechnungsbereich (7) gestaltet ist, um die Konzentration des verbrennungsabgeleiteten NOx auf der Basis der Summenkonzentration und der Konzentration des abgeleiteten NO, das von NH$_3$ abgeleitet worden ist, zu berechnen.

3. NOx-Konzentrationsmesssystem (1), das eine Konzentration von NOx, das in einem Abgas enthalten ist, das NOx und NH$_3$ enthält, messen kann und einen NOx-Sensor (2), einen Erfassungsbereich (3), einen Strömungsgeschwindigkeitserfassungsbereich, einen NH$_3$-Konzentrationsschätzbereich (5) und einen Berechnungsbereich (7) aufweist, wobei

der NOx-Sensor (2) Folgendes aufweist: eine Gaskammer (20), in die das Abgas eingeleitet wird; eine Sensorzelle (26s), die einen Festelektrolytkörper mit einer Sauerstoffionenleitfähigkeit hat, der eine Plattenform hat und an dessen Oberflächen Elektroden ausgebildet sind; und einen Gaseinleitungsbereich (29), durch den hindurch das Abgas in die Gaskammer (20) eingeleitet wird,

der NOx-Sensor (2) gestaltet ist, um eine Summenkonzentration aus einer Konzentration eines verbrennungsabgeleiteten NOx als NOx, das in dem Abgas enthalten war, und einer Konzentration von abgeleitetem NO, das von NH$_3$ abgeleitet worden ist, als eine Konzentration von NO, das durch Oxidation des NH$_3$ erzeugt wird, zu messen, und

der Erfassungsbereich (3) gestaltet ist, um wenigstens einen Parameter von den Parametern Luft/Kraftstoff-Verhältnis (A/F) des Abgases, Konzentration von O$_2$, das in dem Abgas enthalten ist, und Konzentration von H$_2$O, das in dem Abgas enthalten ist, zu erfassen,

der Strömungsgeschwindigkeitserfassungsbereich gestaltet ist, um eine Strömungsgeschwindigkeit des Abgases zu erfassen,

der NH$_3$-Konzentrationsschätzbereich (5) gestaltet ist, um eine Konzentration von NH$_3$, das in einem sich außen befindlichen Abgas enthalten ist, das sich um den NOx-Sensor herum befindet und nicht im Inneren des NOx-Sensors befindet, zu schätzen, bevor das sich außen befindliche Abgas in den Gaseinleitungsbereich (29) des NOx-Sensors eingeleitet wird,

der Berechnungsbereich (7) gestaltet ist, um die Konzentration des abgeleiteten NO, das von NH$_3$ abgeleitet worden ist, auf der Basis der Konzentration des NH$_3$, das in dem sich außen befindlichen Abgas enthalten ist, der Strömungsgeschwindigkeit des Abgases und wenigstens einem Parameter von den Parametern Luft/Kraftstoff-Verhältnis, Konzentration von O$_2$ und Konzentration von H$_2$O zu berechnen, und

der Berechnungsbereich (7) gestaltet ist, um die Konzentration des verbrennungsabgeleiteten NOx auf der Basis der Summenkonzentration und der Konzentration des abgeleiteten NO, das von NH$_3$ abgeleitet worden ist, zu berechnen.

4. NOx-Konzentrationsmesssystem (1), das eine Konzentration von NOx, das in einem Abgas enthalten ist, das NOx und NH$_3$ enthält, messen kann und einen NOx-Sensor (2), einen Erfassungsbereich (3), einen Strömungsgeschwindigkeitserfassungsbereich, einen NH$_3$-Konzentrationserfassungsbereich (5) und einen Berechnungsbereich (7) aufweist, wobei

der NOx-Sensor (2) Folgendes aufweist: eine Gaskammer (20), in die ein Abgas eingeleitet wird; eine Sensorzelle (26s), die einen Festelektrolytkörper mit einer Sauerstoffionenleitfähigkeit hat, der eine Plattenform hat und an dessen Oberflächen Elektroden ausgebildet sind; und einen Gaseinleitungsbereich (29), durch den das Abgas in die Gaskammer (20) eingeleitet wird,

der NOx-Sensor (2) gestaltet ist, um eine Summenkonzentration aus einer Konzentration von verbrennungsabgeleitetem NOx als NOx, das in dem Abgas enthalten war, und einer Konzentration von abgeleitetem NO, das von NH$_3$ abgeleitet worden ist, als eine Konzentration von NO, das durch Oxidation des NH$_3$ erzeugt wird, zu messen, und

der Erfassungsbereich (3) gestaltet ist, um wenigstens einen Parameter von den Parametern Luft/Kraftstoff-Verhältnis (A/F) des Abgases, Konzentration von O$_2$, das in dem Abgas enthalten ist, und Konzentration von H$_2$O, das in dem Abgas enthalten ist, zu erfassen,

der Strömungsgeschwindigkeitserfassungsbereich gestaltet ist, um eine Strömungsgeschwindigkeit des Abgases zu erfassen,

der NH$_3$-Konzentrationserfassungsbereich (5) gestaltet ist, um eine Konzentration von NH$_3$, das in einem sich außen befindlichen Abgas, das um den NOx-Sensor herum nicht im Inneren des NOx-Sensors vorhanden ist, zu erfassen, bevor das sich außen befindliche Abgas in den Gaseinleitungsbereich (29) des NOx-Sensors eingeleitet wird,

der Berechnungsbereich (7) gestaltet ist, um die Konzentration des abgeleiteten NO, das von NH$_3$ abgeleitet worden ist, auf der Basis der Konzentration des NH$_3$, das in dem sich außen befindlichen Abgas enthalten ist, der Strömungsgeschwindigkeit des Abgases und wenigstens einem Parameter von den Parametern Luft/Kraftstoff-Verhält-

nis, Konzentration von $O_2$ und Konzentration von $H_2O$ zu berechnen, und

der Berechnungsbereich (7) gestaltet ist, um die Konzentration des verbrennungsabgeleiteten NOx auf der Basis der Summenkonzentration und der Konzentration des abgeleiteten NO, das von $NH_3$ abgeleitet worden ist, zu berechnen.

**Revendications**

1.  Système de mesure de concentration en NOx (1) pouvant mesurer une concentration de NOx contenu dans un gaz d'échappement qui contient du NOx et du $NH_3$, comprenant un capteur de NOx (2), une section de détection (3), une section de détection de concentration de $NH_3$, et une section de calcul (7), dans lequel
    le capteur de NOx (2) comprend : une chambre à gaz (20) dans laquelle est introduit un gaz d'échappement ; une cellule de capteur (26s) ayant un corps d'électrolyte solide à conductivité des ions oxygène ayant une forme plate, sur les surfaces duquel sont formées des électrodes ; et une section d'introduction de gaz (29) à travers laquelle le gaz d'échappement est introduit dans la chambre à gaz (20),
    le capteur de NOx (2) est configuré pour mesurer une concentration totale d'une concentration de NOx dérivé de la combustion en tant que NOx, qui a été contenue dans le gaz d'échappement, et d'une concentration de NO dérivé qui a été dérivé de $NH_3$ en tant que concentration de NO produit par oxydation du $NH_3$, et
    la section de détection (3) est configurée pour détecter au moins l'un d'un rapport air-carburant (A/F) du gaz d'échappement, d'une concentration d'$O_2$ contenu dans le gaz d'échappement, d'une concentration de $H_2O$ contenu dans le gaz d'échappement et d'une vitesse d'écoulement du gaz d'échappement,
    la section de détection de concentration de $NH_3$ est configurée pour détecter une concentration de $NH_3$ contenu dans le gaz d'échappement extérieur qui est présent autour du capteur de NOx, mais pas à l'intérieur du capteur de NOx avant que le gaz d'échappement extérieur ne soit introduit dans la section d'introduction de gaz (29) du capteur de NOx,
    la section de calcul (7) est configurée pour calculer la concentration du NO dérivé qui a été dérivé de $NH_3$ sur la base de la concentration de $NH_3$ contenu dans le gaz d'échappement extérieur et d'au moins l'un du rapport air-carburant, de la concentration en $O_2$, de la concentration en $H_2O$ et de la vitesse d'écoulement du gaz d'échappement,
    la section de calcul (7) est configurée pour calculer la concentration du NOx dérivé de la combustion sur la base de la concentration totale et de la concentration du NO dérivé qui a été dérivé de $NH_3$.

2.  Système de mesure de concentration en NOx (1) pouvant mesurer une concentration de NOx contenu dans un gaz d'échappement qui contient du NOx et du $NH_3$, comprenant un capteur de NOx (2), une section de détection (3), une section d'estimation de concentration en $NH_3$ (5), et une section de calcul (7), dans lequel
    le capteur de NOx (2) comprend : une chambre à gaz (20) dans laquelle est introduit un gaz d'échappement ; une cellule de capteur (26s) ayant un corps d'électrolyte solide à conductivité des ions oxygène ayant une forme plate, sur les surfaces duquel sont formées des électrodes ; et une section d'introduction de gaz (29) à travers laquelle le gaz d'échappement est introduit dans la chambre à gaz (20),
    le capteur de NOx (2) est configuré pour mesurer une concentration totale d'une concentration de NOx dérivé de la combustion en tant que NOx, qui a été contenue dans le gaz d'échappement, et d'une concentration de NO dérivé qui a été dérivé de $NH_3$ en tant que concentration de NO produit par oxydation du $NH_3$, et
    la section de détection (3) est configurée pour détecter au moins l'un d'un rapport air-carburant (A/F) du gaz d'échappement, d'une concentration d'$O_2$ contenu dans le gaz d'échappement, d'une concentration de $H_2O$ contenu dans le gaz d'échappement et d'une vitesse d'écoulement du gaz d'échappement,
    la section d'estimation de concentration en $NH_3$ (5) est configurée pour estimer une concentration de $NH_3$ contenu dans le gaz d'échappement extérieur qui est présent autour du capteur de NOx, mais pas à l'intérieur du capteur de NOx avant que le gaz d'échappement extérieur ne soit introduit dans la section d'introduction de gaz (29) du capteur de NOx,
    la section de calcul (7) est configurée pour calculer la concentration du NO dérivé qui a été dérivé de $NH_3$ sur la base de la concentration de $NH_3$ contenu dans le gaz d'échappement extérieur et d'au moins l'un du rapport air-carburant, de la concentration en $O_2$, de la concentration en $H_2O$ et de la vitesse d'écoulement du gaz d'échappement, et
    la section de calcul (7) est configurée pour calculer la concentration du NOx dérivé de la combustion sur la base de la concentration totale et de la concentration du NO dérivé qui a été dérivé de $NH_3$.

3.  Système de mesure de concentration en NOx (1) pouvant mesurer une concentration de NOx contenu dans un gaz d'échappement qui contient du NOx et du $NH_3$, comprenant un capteur de NOx (2), une section de détection (3), une section de détection de vitesse d'écoulement, , une section d'estimation de concentration en $NH_3$ (5), et une

section de calcul (7), dans lequel

le capteur de NOx (2) comprend : une chambre à gaz (20) dans laquelle est introduit un gaz d'échappement ; une cellule de capteur (26s) ayant un corps d'électrolyte solide à conductivité des ions oxygène ayant une forme plate, sur les surfaces duquel sont formées des électrodes ; et une section d'introduction de gaz (29) à travers laquelle le gaz d'échappement est introduit dans la chambre à gaz (20),

le capteur de NOx (2) est configuré pour mesurer une concentration totale d'une concentration de NOx dérivé de la combustion en tant que NOx, qui a été contenue dans le gaz d'échappement, et d'une concentration de NO dérivé qui a été dérivé de $NH_3$ en tant que concentration de NO produit par oxydation du $NH_3$, et

la section de détection (3) est configurée pour détecter au moins l'un d'un rapport air-carburant (A/F) du gaz d'échappement, d'une concentration d'$O_2$ contenu dans le gaz d'échappement et d'une concentration de $H_2O$ contenu dans le gaz d'échappement,

la section de détection de vitesse d'écoulement est configurée pour détecter une vitesse d'écoulement du gaz d'échappement,

la section d'estimation de concentration en $NH_3$ (5) est configurée pour estimer une concentration de $NH_3$ contenu dans le gaz d'échappement extérieur qui est présent autour du capteur de NOx, mais pas à l'intérieur du capteur de NOx avant que le gaz d'échappement extérieur ne soit introduit dans la section d'introduction de gaz (29) du capteur de NOx,

la section de calcul (7) est configurée pour calculer la concentration du NO dérivé qui a été dérivé de $NH_3$ sur la base de la concentration de $NH_3$ contenu dans le gaz d'échappement extérieur, de la vitesse d'écoulement du gaz d'échappement et d'au moins l'un du rapport air-carburant, de la concentration en $O_2$ et de la concentration en $H_2O$, et la section de calcul (7) est configurée pour calculer la concentration du NOx dérivé de la combustion sur la base de la concentration totale et de la concentration du NO dérivé qui a été dérivé de $NH_3$.

4. Système de mesure de concentration en NOx (1) pouvant mesurer une concentration de NOx contenu dans un gaz d'échappement qui contient du NOx et du $NH_3$, comprenant un capteur de NOx (2), une section de détection (3), une section de détection de vitesse d'écoulement, une section de détection de concentration de $NH_3$ (5), et une section de calcul (7), dans lequel

le capteur de NOx (2) comprend : une chambre à gaz (20) dans laquelle est introduit un gaz d'échappement ; une cellule de capteur (26s) ayant un corps d'électrolyte solide à conductivité des ions oxygène ayant une forme plate, sur les surfaces duquel sont formées des électrodes ; et une section d'introduction de gaz (29) à travers laquelle le gaz d'échappement est introduit dans la chambre à gaz (20),

le capteur de NOx (2) est configuré pour mesurer une concentration totale d'une concentration de NOx dérivé de la combustion en tant que NOx, qui a été contenue dans le gaz d'échappement, et d'une concentration de NO dérivé qui a été dérivé de $NH_3$ en tant que concentration de NO produit par oxydation du $NH_3$, et

la section de détection (3) est configurée pour détecter au moins l'un d'un rapport air-carburant (A/F) du gaz d'échappement, d'une concentration d'$O_2$ contenu dans le gaz d'échappement et d'une concentration de $H_2O$ contenu dans le gaz d'échappement,

la section de détection de vitesse d'écoulement est configurée pour détecter une vitesse d'écoulement du gaz d'échappement,

la section de détection de concentration de $NH_3$ (5) est configurée pour détecter une concentration de $NH_3$ contenu dans le gaz d'échappement extérieur qui est présent autour du capteur de NOx, mais pas à l'intérieur du capteur de NOx avant que le gaz d'échappement extérieur ne soit introduit dans la section d'introduction de gaz (29) du capteur de NOx,

la section de calcul (7) est configurée pour calculer la concentration du NO dérivé qui a été dérivé de $NH_3$ sur la base de la concentration de $NH_3$ contenu dans le gaz d'échappement extérieur, de la vitesse d'écoulement du gaz d'échappement, et d'au moins l'un du rapport air-carburant, de la concentration en $O_2$ et de la concentration en $H_2O$, et la section de calcul (7) est configurée pour calculer la concentration du NOx dérivé de la combustion sur la base de la concentration totale et de la concentration du NO dérivé qui a été dérivé de $NH_3$.

# FIG.1

EP 3 324 178 B1

# FIG.2

EP 3 324 178 B1

# FIG.3

# FIG.4

14

15

292

20

23m

22

23p

23s

23b

16

21

10

Z

Y

X

# FIG.5

# FIG.6

EP 3 324 178 B1

# FIG.7

EXHAUST GAS TO BE MEASURED  
OUTPUT OF NOx SENSOR  
CALCULATED NOx CONCENTRATION

$C_2$ NH$_3$  
$C_1$ NO$_x$  
$C_3$ DERIVED NO FROM NH$_3$  
$C_1$ NO$_x$  
$C_4$  
$C_1$ NO$_x$

## FIG.8

RELATIONSHIP BETWEEN $H_2O$ CONCENTRATION AND $NH_3$ DETECTION SENSITIVITY

$NH_3$ DETECTION SENSITIVITY $\alpha H_2O$ $(=C_3/C_2)$

$H_2O$ CONCENTRATION (%)

# FIG.9

RELATIONSHIP BETWEEN $O_2$ CONCENTRATION AND $NH_3$ DETECTION SENSITIVITY

NH$_3$ DETECTION SENSITIVITY $\alpha O_2 (=C_3/C_2)$

$O_2$ CONCENTRATION (%)

EP 3 324 178 B1

# FIG.10

# FIG.11

RELATIONSHIP BETWEEN A/F AND $O_2$ CONCENTRATION

# FIG.12

RELATIONSHIP BETWEEN A/F AND $H_2O$ CONCENTRATION

# FIG.13

RELATIONSHIP BETWEEN THICKNESS OF TRAP LAYER AND $NH_3$ DETECTION SENSITIVITY

# FIG.14

RELATIONSHIP BETWEEN GAS INTRODUCTION SECTION AND $NH_3$ DETECTION SENSITIVITY

# FIG.15

EP 3 324 178 B1

## FIG.16

±40%

SENSOR OUTPUT × COMPENSATION COEFFICIENT (ppm)

NH₃ CONCENTRATION (ppm) OF MASS ANALYZER

## FIG.17

±20%

SENSOR OUTPUT × COMPENSATION COEFFICIENT (ppm)

NH₃ CONCENTRATION (ppm) OF MASS ANALYZER

# FIG.18

NH₃ : 4800ppm,

SUM FLOW AMOUNT : 50,100,200ml/min

299

290

109

MASS ANALYZER

100

# FIG.19

50ml/min

100ml/min

200ml/min

SIGNAL STRENGTH OF NO GENERATION AMOUNT

100    200    300    400    500    600    700    800    900    1000

TEMPERATURE (°C)

# FIG.20

RELATIONSHIP BETWEEN $H_2O$ CONCENTRATION AND $NH_3$ DETECTION SENSITIVITY

REGION OF A/F OF NOT LESS THAN 40

REGION OF A/F OF NOT MORE THAN 40

EP 3 324 178 B1

# FIG.21

RELATIONSHIP BETWEEN $O_2$ CONCENTRATION AND $NH_3$ DETECTION SENSITIVITY

NH₃ DETECTION SENSITIVITY $\alpha O_2 (= C_3/C_2)$

$O_2$ CONCENTRATION (%)

REGION OF A/F OF NOT MORE THAN 20

REGION OF A/F OF NOT LESS THAN 20

EP 3 324 178 B1

# FIG.22

START

S1 — IS A/F NOT LESS THAN 40 ? — NO

YES

S2 — CALCULATE DERIVED NO WHICH HAS BEEN DERIVED FROM $NH_3$ BY USING $H_2O$ CONCENTRATION

S3 — IS A/F NOT MORE THAN 20 ? — NO

YES

S4 — CALCULATE DERIVED NO WHICH HAS BEEN DERIVED FROM $NH_3$ BY USING $O_2$ CONCENTRATION

S5 — CONCENTRATION OF $NH_3$ CONTAINED IN EXHAUST GAS WHICH IS PRESENT AROUND NOx SENSOR = DERIVED NO FROM $NH_3$

END

# FIG.23

$C_2$

$NH_3$

$C_1$

$NO_x$

$C_3$

DERIVED NO FROM $NH_3$

$C_1$

$NO_x$

$C_4$

$C_2$

$NO_x$

$C_1'$

EXHAUST GAS TO BE
MEASURED

OUTPUT OF $NO_x$
SENSOR

CALCULATED $NO_x$
CONCENTRATION

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- JP 2011075546 A
- EP 15783318 A
- EP 3136091 A